# FASCICULE DE BREVET EUROPEEN

(11) **EP 3 127 280 B1**
(45) Date de publication et mention de la délivrance du brevet: **06.11.2019**
(21) Numéro de dépôt: 15717575.3
(22) Date de dépôt: 31.03.2015
(51) Int. Cl.: H04N 21/414, H04N 21/436, H04N 21/61, H04N 21/643, H04N 21/81

(54) **DISPOSITIF ET PROCEDE DE DEPORT DE LA RESTITUTION DE CONTENUS MULTIMEDIA**
VORRICHTUNG UND VERFAHREN ZUM VERSETZTEN ABSPIELEN VON MULTIMEDIALEN INHALTEN
APPARATUS AND METHOD FOR THE OFFSET RENDERING OF MULTIMEDIA CONTENTS

(30) Priorité: 31.03.2014 FR 1452830
(43) Date de publication de la demande: 08.02.2017
(73) Titulaire: Orange, 75015 Paris (FR)
(72) Inventeur: CONAN, Martin, F-35510 Cesson Sevigne (FR); LEPOIL, Elisabeth, F-35135 Chantepie (FR); LEDUBY, Jean-Bernard, F-22430 Erquy (FR)
(86) Numéro de dépôt international: PCT/FR2015/050821
(87) Numéro de publication internationale: WO 2015/150684

(56) Documents cités:
- WO-A1-2014/038342
- DE-U1-202013 006 341
- TAESHIK SHON ET AL: "Improved RF4CE key agreement approach involving two-phase key distribution for smart-convergence home device", SECURITY AND COMMUNICATION NETWORKS, vol. 5, no. 9, 25 septembre 2012 (2012-09-25), pages 974-986, XP055135393, ISSN: 1939-0114, DOI: 10.1002/sec.382

## Description

### Domaine technique

L'invention s'applique à la communication entre les terminaux d'un réseau local, en particulier à la communication d'un dispositif doté d'une fonction de restitution, dit dispositif de restitution, avec un dispositif mobile.

L'invention s'applique tout particulièrement au déplacement, ou déport, de certaines fonctions du dispositif mobile sur le dispositif de restitution, par le biais d'un dispositif de déport.

L'invention s'applique en particulier au dispositif de déport qui permet la communication entre le dispositif mobile et le dispositif de restitution, dispositif prenant la forme d'une clé électronique (en anglais, *dongle*) connectée au dispositif de restitution et dotée d'une fonction de communication, par exemple sans fil de type WiFi, pour pouvoir se connecter au réseau local.

### Etat de la technique

Avec le développement des réseaux et des terminaux mobiles, il est aujourd'hui possible de restituer des contenus multimédia numériques (vidéo, audio, etc.) sur un dispositif mobile d'un utilisateur, par exemple un *smartphone* ou une tablette numérique.

Cependant, dans un certain nombre de situations, et notamment lorsque l'utilisateur du dispositif mobile se trouve à la maison, il lui est plus agréable de restituer le contenu multimédia, par exemple un film, sur un poste de télévision ou sur un autre terminal du réseau local, par exemple un ordinateur, disposant d'un plus grand écran que le dispositif mobile. Par « restituer », on entend ici la mise à disposition du contenu pour l'utilisateur : visualisation, affichage, restitution sonore, etc.

On rappelle ici qu'un réseau local, aussi appelé réseau domestique, est un réseau informatique qui relie ensemble, avec ou sans fils, des terminaux (ordinateurs, périphériques d'impression, de restitution, de stockage, etc.) d'une maison aptes à communiquer ensemble. Un réseau domestique comporte généralement un équipement routeur, aussi communément appelé passerelle domestique, ou passerelle de service, élément intermédiaire assurant la redirection, ou routage, des paquets de données entre les différents terminaux et les réseaux qui lui sont connectés. Un tel réseau domestique connecte souvent les différents terminaux en utilisant la technologie WiFi. On rappelle ici que l'appellation Wifi (pour « Wireless Fidelity ») rassemble des technologies de transmission sans fil permettant de créer des réseaux informatiques sans fil basés sur les normes de la famille IEEE 802.11.

L'écran du dispositif mobile étant souvent de taille réduite, et les hauts parleurs de qualité médiocre, il n'est pas agréable d'y restituer un contenu de type multimédia. De plus, il est malaisé de restituer de tels contenus sur l'écran d'un dispositif mobile tout en l'utilisant à d'autres fonctions, comme par exemple la gestion des appels téléphoniques, des messages textuels, etc.

Il est donc intéressant, à plusieurs points de vue, de déporter la restitution du contenu multimédia sur un autre dispositif.

A cet effet sont apparus récemment des produits qui permettent de restituer des contenus multimédia sur un PC (ordinateur personnel) ou un TV (téléviseur) tout en déchargeant le dispositif mobile des tâches de décodage, affichage, restitution sonore, etc., inhérentes à la restitution d'un contenu numérique.

La publication de TAESHIK SHON ET AL: "Improved RF4CE key agreement approach involving two phase key distribution for smart-convergence home device", SECURITY AND COMMUNICATION NETWORKS, vol. 5, no. 9 (25 septembre 2012) traite de la connectivité par liens radio-fréquence entre dispositifs et équipements dans un contexte domestique. Le document décrit des mécanismes basés sur l'utilisation de la spécification « RF4CE » (pour Radio Frequency for Consumer Electronics), une solution de contrôle et de communication des équipements par radio-Fréquence, en remplacement par exemple d'une commande par liaison infra-rouge.

Il existe des dispositifs aptes à restituer en temps réel des contenus numériques proposés sous formes de flux, se présentant sous forme d'une clé électronique se branchant sur un port multimédia de type HDMI (de l'anglais *High-Definition Multimedia Interface,* une interface électrique et logique permettant le transfert de données numériques multimédia non compressées en haute définition) d'un téléviseur. Le contenu multimédia issu d'une application, comme par exemple une application de téléchargement progressif sur le réseau Internet étendu (WAN), comme par exemple YouTube©, est sélectionné par l'utilisateur sur un premier appareil connecté au réseau local (*smartphone,* tablette, ordinateur, etc.) et restitué sur le téléviseur via le dispositif de déport. Une fois le dispositif branché et alimenté, il se connecte, comme tout autre périphérique du réseau local, à la passerelle de service, via une connexion radio de type WiFi, par un processus d'appairage classique au cours duquel sont entrés notamment l'identifiant de la passerelle de service et sa clé de sécurité WEP (de l'anglais *Wired Equivalent Privacy*). Ces identifiants sont récupérés lors d'une étape préalable au cours de laquelle le dispositif active son module de communication sans fils (WiFi) afin de recevoir lesdits identifiants.

Une fois que le dispositif est ainsi attaché (on dit aussi *apparié,* ou *appairé*) à une passerelle de service donnée, et donc à un réseau local donné, il ne peut plus en changer facilement : pour basculer sur un autre réseau local, il lui faut de nouveau réaliser une phase d'appairage pour obtenir les identifiants de la nouvelle passerelle de service à laquelle il souhaite se connecter. Au cours de cette opération, on perd de surcroît les identifiants de la première passerelle, ce qui implique qu'il faudra recommencer ultérieurement la phase d'appairage.

L'invention offre une solution ne présentant pas les inconvénients de l'état de la technique.

### L'invention

A cet effet, selon un aspect fonctionnel, l'invention a pour objet un procédé de déport de la restitution d'un contenu numérique, ledit contenu étant disponible sur un serveur de contenus accessible via au moins une passerelle de service et pouvant être traité par au moins deux dispositifs d'un utilisateur, un premier dispositif dit dispositif mobile et au moins un second dispositif dit dispositif de restitution, le dispositif de restitution étant connecté à un dispositif de déport, ledit contenu étant sélectionné sur le dispositif mobile et restitué sur le dispositif de restitution, le procédé étant caractérisé en ce qu'il comporte, au niveau du dispositif de déport, les étapes suivantes :
- ouverture d'un canal de communication point à point entre le dispositif portable et le dispositif de déport ;
- réception sur le canal de communication d'un identifiant d'une passerelle de service ;
- connexion du dispositif de déport à un réseau local en utilisant l'identifiant de passerelle reçu ;
- réception d'un identifiant d'un contenu numérique à restituer ;
- accès au contenu identifié sur le serveur de contenus via la passerelle identifiée.

Ainsi, selon l'invention, une connexion en point à point est établie entre le dispositif mobile et le dispositif de déport (*dongle*) de manière à ce que le dispositif mobile communique au moins l'identité d'une passerelle de service au dispositif de déport. Cette connexion, effectuée sur un lien que l'on appelle indifféremment « canal de communication point à point » ou « session point à point » est avantageusement établie en point à point, c'est-à-dire que seuls les deux dispositifs spécifiés y accèdent, ce qui constitue un gage de sécurité sur les données échangées et limite les risques d'intrusions d'autres dispositifs sur le lien de communication, par exemple dans le but d'intercepter les données ou de les modifier. C'est notamment sur cette connexion établie de point à point qu'est reçue l'identité de la passerelle de service (SSID, clé WEP, etc.) pour la connexion ultérieure du dispositif de déport au réseau local. De cette manière, on est certain que n'importe quel dispositif, notamment un autre dispositif de déport, ne reçoive pas des paramètres d'accès au réseau qui sont prévus pour un dispositif de déport donné, et qu'inversement n'importe quel dispositif du réseau n'interfère sur la communication établie afin de prendre le contrôle du dispositif de déport. Avantageusement, la passerelle de service peut être quelconque selon l'invention, c'est-à-dire qu'elle peut être celle de l'utilisateur ou non, par exemple celle de l'un de ses voisins.

On notera que les deux étapes de réception peuvent être exécutées dans un ordre différent, par exemple l'identifiant de contenu peut être reçu avant l'identifiant de passerelle.

Selon un mode de mise en œuvre particulier de l'invention, le procédé est en outre caractérisé en ce que la phase d'ouverture d'un canal de communication entre le dispositif mobile et le dispositif de déport est suivie d'une étape d'émission sur le canal de communication d'un identifiant du dispositif de déport.

Ce mode de réalisation permet notamment au dispositif mobile de sélectionner un dispositif de déport parmi plusieurs dispositifs possibles, qui seraient connectés par exemple sur plusieurs périphériques différents de l'utilisateur (TV, PC, etc.) En effet si chacun des dispositifs de déport a fourni une identification qui lui est propre, le dispositif mobile peut le sélectionner par la suite en connaissant son identité et les caractéristiques qui lui sont associées : le TV sur lequel il est connecté, ses capacités de décodage, de transmission, la(les) quelle(s) passerelle(s) auquel il est attaché, etc.

Selon un autre mode de mise en œuvre particulier de l'invention, qui pourra être mis en œuvre alternativement ou cumulativement avec les précédents, un procédé tel que décrit ci-dessus est en outre caractérisé en ce que le canal de communication entre le dispositif mobile et le dispositif de déport est établi sur un lien à basse consommation.

Usuellement, les dispositifs mobiles selon l'invention, typiquement des dispositifs de type *smartphone* ou tablette numérique, comportent au moins une interface utilisant une technologie sans fil radio de basse puissance, grâce à laquelle il est possible d'échanger sur un canal radio des messages conformes à une norme dite « à faible consommation ». Au nombre de ces normes, on peut citer par exemple la technologie Bluetooth (une technologie radio de courte distance destinée à simplifier les connexions entre les appareils électroniques, développée par l'association « Bluetooth SIG ») ou encore le protocole Zigbee ou le protocole Z-Wave (protocoles qui permettent également la communication de périphériques sur un lien radio, avec une consommation réduite), DECT (autre norme de communication sans fils), etc. Dans cette ensemble de normes, la technologie Bluetooth est particulièrement répandue et utile pour établir une connexion entre plusieurs appareils qui sont proches l'un de l'autre. Elle est d'utilisation très simple, consomme peu d'énergie et est néanmoins sécurisée. De plus, elle est indépendante du protocole WiFi habituellement utilisé pour la connexion au réseau local. Or il est particulièrement avantageux, dans le contexte de l'invention, de disposer d'une telle indépendance : en effet, il est possible, dans ce contexte, d'imposer à un dispositif qui est déjà connecté à un réseau local en WiFi (via une première passerelle de service) de basculer vers un autre réseau local (via une seconde passerelle de service), en lui fournissant les identifiants de ce second réseau sur le lien à basse consommation. Cette bascule est naturellement plus difficile à mettre en place dans le cas où la liaison WiFi est utilisée à la fois pour établir le canal de communication point à point et pour la connexion au réseau local, la liaison au réseau local venant supplanter la liaison point à point.

Selon un autre mode de mise en œuvre particulier de l'invention, qui pourra être mis en œuvre alternativement ou cumulativement avec les précédents, un procédé tel que décrit ci-dessus inclut en outre une étape de mémorisation de l'identifiant du réseau local dans une mémoire du dispositif de déport.

Ce mode de réalisation de l'invention permet de reconnecter automatiquement le dispositif de déport à une passerelle de service quelconque, sans avoir à rentrer de nouveau les identifiants puisqu'ils ont été mémorisés dans la mémoire du dispositif de déport. Il procure ainsi l'avantage de pouvoir choisir un réseau local parmi plusieurs si plusieurs réseaux locaux sont accessibles : le dispositif de déport peut ainsi, comme la plupart des terminaux WiFi, mémoriser les identifiants de plusieurs réseaux et choisir, automatiquement ou sur requête, le bon réseau en fonction par exemple de la passerelle de service accessible dans l'endroit où il se trouve, de la puissance avec laquelle elle émet, du type d'opérateur auquel elle appartient, etc.

Selon un autre mode de mise en œuvre particulier de l'invention, qui pourra être mis en œuvre alternativement ou cumulativement avec les précédents, le procédé est en outre caractérisé en ce que la réception d'un identifiant d'un contenu à restituer se fait sur le canal de communication point à point.

Ce mode de mise en œuvre de l'invention permet de s'assurer que c'est bien le mobile qui a émis la demande de connexion au dispositif de déport dans le but de restituer des contenus et ouvert la communication point à point qui transmet l'identifiant du contenu. On évite ainsi que n'importe quel terminal du réseau local prenne indûment le contrôle du dispositif de déport et lui demande de traiter des contenus numériques. Avantageusement, ce mode de réalisation de l'invention permet aussi de s'affranchir de la connexion du dispositif mobile au réseau local. Par exemple, l'identifiant du contenu peut être transmis via la liaison point à point Bluetooth établie entre les deux dispositifs. Dans ce cas, le dispositif mobile ne devra pas être nécessairement connecté au réseau local puisqu'il peut continuer à échanger des informations avec le dispositif de déport via la liaison *bluetooth*.

Selon un autre mode de mise en œuvre particulier de l'invention, qui pourra être mis en œuvre alternativement ou cumulativement avec les précédents, le procédé est en outre caractérisé en ce que la phase d'ouverture d'un canal de communication point à point entre le dispositif mobile et le dispositif de déport est suivie d'une sous-étape d'appairage au cours de laquelle l'utilisateur positionne le dispositif de déport dans un état d'appairage.

Avantageusement selon ce mode, il n'est pas nécessaire de rentrer un mot de passe pour se connecter au réseau local. Par exemple, le protocole « WiFi Protected Setup » (WPS) autorise, de manière bien connue, deux dispositifs qui se trouvent à proximité l'un de l'autre, lorsqu'ils sont positionnés dans ce mode, à établir une communication. Il n'est donc pas nécessaire de transmettre le mot de passe (clé WEP) sur le canal de communication en point à point.

Selon un autre aspect fonctionnel, l'invention a pour objet un procédé de contrôle du déport d'un contenu numérique, ledit contenu étant disponible sur un serveur de contenus accessible via au moins une passerelle de service et pouvant être traité par au moins deux dispositifs de l'utilisateur, un premier dispositif dit dispositif mobile et au moins un second dispositif dit dispositif de restitution, le dispositif de restitution étant connecté à un dispositif de déport, ledit contenu étant sélectionné sur le dispositif mobile et restitué sur le dispositif de restitution, le procédé étant caractérisé en ce qu'il comporte, au niveau du dispositif mobile, les étapes de :
- ouverture d'un canal de communication point à point entre le dispositif mobile et le dispositif de déport ;
- émission sur le canal de communication d'un identifiant d'une passerelle de service;
- émission d'un identifiant d'un contenu à restituer.

Ce procédé présente des avantages analogues à ceux décrits précédemment en relation avec le procédé de déport : le procédé de contrôle, s'effectuant typiquement sur le dispositif mobile de l'utilisateur, assure le contrôle de le canal de communication point à point afin de garantir l'échange des données de manière fiable, puis gère l'émission d'un identifiant du contenu à déporter par le dispositif de déport.

Selon un mode de mise en œuvre particulier, le procédé de contrôle du déport est en outre caractérisé en ce que les identifiants de passerelle reçus sont ceux du dispositif mobile.

Avantageusement selon ce mode, c'est le dispositif mobile qui sert de passerelle en mode routeur (ce mode est appelé couramment *tethering* selon sa désignation anglaise), ce qui permet de s'affranchir de la nécessité d'une passerelle de service, un seul dispositif (le téléphone mobile) servant à dialoguer avec le dispositif de déport, à la fois pour sélectionner et transmettre les identifiants du contenu à restituer et pour se connecter au réseau de télécommunication étendu dans lequel se trouve le serveur de contenus.

Selon un autre mode de mise en œuvre particulier, qui pourra être mis en œuvre alternativement ou cumulativement avec le précédent, le procédé de contrôle est en outre caractérisé en ce qu'il comporte une étape de connexion du dispositif mobile à un réseau local en utilisant l'identifiant de passerelle reçu.

Avantageusement, le réseau local utilisé par le dispositif de déport pour se connecter au serveur de contenus peut selon ce mode de réalisation être celui auquel appartient également le dispositif mobile. Les deux dispositifs (mobile et de déport) peuvent ainsi communiquer dans le cadre du réseau local piloté par la même passerelle de service, en utilisant classiquement des protocoles de réseau local, comme par exemple UPnP (de l'anglais « Universal Plug and Play »).

Selon un autre mode de mise en œuvre particulier, qui pourra être mis en œuvre alternativement ou cumulativement avec les précédents, le procédé de contrôle du déport d'un contenu numérique est en outre caractérisé en ce qu'il inclut :
- une étape de réception sur le canal de communication point à point d'un identifiant du dispositif de déport ;
- une étape de choix d'un dispositif de déport parmi plusieurs, en fonction d'un identifiant reçu.

Ce mode de mise en œuvre de l'invention permet de choisir entre plusieurs dispositifs de déport présents dans le réseau local. Ainsi, si plusieurs dispositifs de l'utilisateur sont équipés d'un dispositif de déport, l'utilisateur peut choisir de retransmettre le contenu vidéo choisi sur son mobile vers un dispositif de restitution particulier, et donc un dispositif d'affichage particulier (un PC, une tablette numérique, un téléviseur, etc.).

Selon un aspect matériel, l'invention concerne également un dispositif de déport d'un contenu numérique disponible sur un serveur de contenus accessible via au moins une passerelle de service et pouvant être traité par au moins deux dispositifs d'un l'utilisateur, un premier dispositif dit dispositif mobile et au moins un second dispositif dit dispositif de restitution, le dispositif de restitution étant connecté à un dispositif de déport, ledit contenu étant sélectionné sur le dispositif mobile et restitué sur le dispositif de restitution, caractérisé en ce que le dispositif comporte :
- un module d'ouverture d'un canal de communication point à point entre le dispositif mobile et le dispositif de déport ;
- un module de réception, sur le canal de communication, d'un identifiant d'une passerelle de service ;
- un module de connexion du dispositif de déport à un réseau local en utilisant l'identifiant de passerelle reçu ;
- un module de réception d'un identifiant d'un contenu à restituer ;
- un module d'accès au contenu identifié sur le serveur de contenus via la passerelle identifiée.

Selon un autre aspect matériel, l'invention concerne également un dispositif de contrôle du déport d'un contenu numérique disponible sur un serveur de contenus accessible via au moins une passerelle de service et pouvant être traité par au moins deux dispositifs d'un l'utilisateur, un premier dispositif dit dispositif mobile et au moins un second dispositif dit dispositif de restitution, le dispositif de restitution étant connecté à un dispositif de déport, ledit contenu étant sélectionné sur le dispositif mobile et restitué sur le dispositif de restitution, caractérisé en ce que le dispositif de contrôle comporte :
- un module d'ouverture d'un canal de communication point à point entre le dispositif mobile et le dispositif de déport ;
- un module d'émission, sur le canal de communication, d'un identifiant d'une passerelle de service ;
- un module d'émission d'une identification d'un contenu à restituer.

Le terme *module* peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également un terminal incluant un dispositif de contrôle du déport tel que décrit ci-dessus.

Selon un autre aspect matériel, l'invention concerne également un terminal incluant un dispositif de contrôle du déport tel que décrit ci-dessus et un module d'émulation de passerelle de service lui permettant d'accéder au serveur de contenus.

Selon un autre aspect matériel, l'invention concerne encore une clé électronique incluant un dispositif de déport tel que décrit ci-dessus.

Selon un autre aspect matériel, l'invention concerne encore un système comprenant un terminal tel que revendiqué ci-dessus, une passerelle numérique, un dispositif de déport et un dispositif de restitution tel que revendiqués ci-dessus.

Selon un autre aspect matériel, l'invention concerne également un programme d'ordinateur apte à être mis en œuvre pour le procédé de déport de la restitution d'un contenu tel que défini ci-dessus, le programme comprenant des instructions de code qui, lorsque le programme est exécuté par un processeur, réalise les étapes du procédé de déport.

Selon un autre aspect matériel, l'invention concerne encore un programme d'ordinateur apte à être mis en œuvre pour le procédé du contrôle du déport d'un contenu tel que défini ci-dessus, le programme comprenant des instructions de code qui, lorsque le programme est exécuté par un processeur, réalise les étapes du procédé de contrôle du déport.

Selon encore un autre aspect matériel, l'invention a trait à un support d'enregistrement lisible par un processeur de données sur lequel est enregistré un programme comprenant des instructions de code de programme pour l'exécution des étapes de l'un quelconque des procédés définis ci-dessus.

Ces dispositifs, ces programmes d'ordinateur, ces supports d'enregistrement, présentent des caractéristiques et avantages analogues à ceux décrits précédemment en relation avec les procédés de déport et de contrôle du déport d'un contenu numérique.

L'invention sera mieux comprise à la lecture de la description qui suit, donnée à titre d'exemple et faite en référence aux dessins annexés.

### Description détaillée d'un exemple de réalisation illustrant l'invention

La figure 1 représente un dispositif mobile et un dispositif de déport dans un réseau local selon l'état de l'art.
La figure 2 représente un chronogramme simplifié des échanges entre un dispositif de déport et un dispositif mobile selon l'état de l'art.
La figure 3 représente un dispositif mobile et un dispositif de déport selon un premier mode de réalisation de l'invention.
La figure 4 représente un dispositif mobile et un dispositif de déport selon un second mode de réalisation de l'invention.
La figure 5 représente une architecture matérielle d'un dispositif de déport connecté à un dispositif mobile, selon un mode de réalisation de l'invention.
La figure 6 représente un chronogramme des échanges entre un dispositif de déport et un dispositif mobile selon un premier mode de réalisation de l'invention.
La figure 7 représente un chronogramme des échanges entre un dispositif de déport et un dispositif mobile selon un autre mode de réalisation de l'invention.

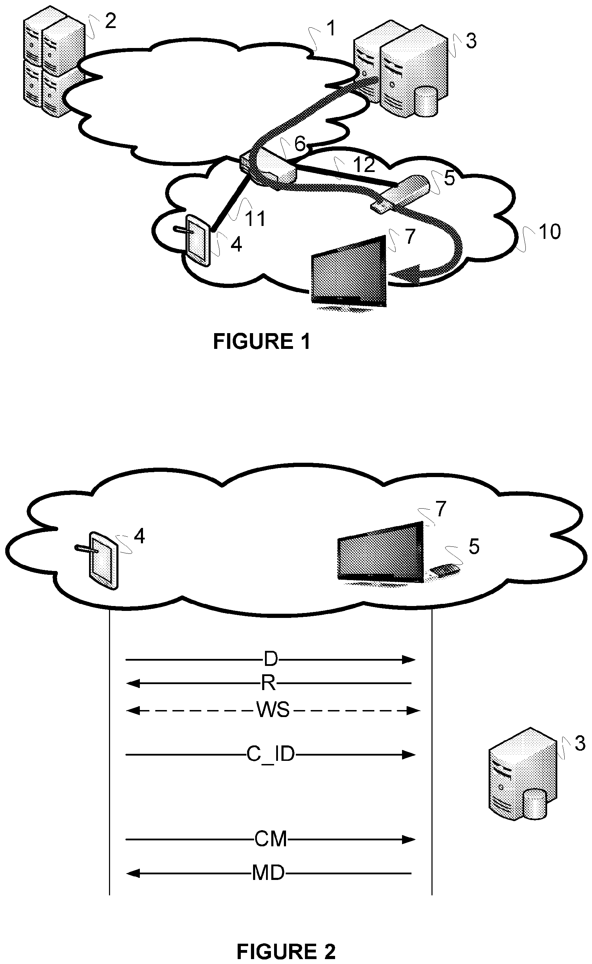

La figure 1 représente un dispositif mobile et un dispositif de déport dans un réseau local selon l'état de l'art. Le réseau local (10) comprend un dispositif mobile (4), un dispositif de restitution (7) d'un utilisateur connecté à un dispositif de déport (5) selon l'état de l'art, et une passerelle de service (6).

Les dispositifs terminaux 4 et 5 sont aptes à établir des connexions avec la passerelle de service (6) reliée par ailleurs au réseau internet (1) étendu (WAN, pour Wide Area Network, par opposition à un réseau local de type LAN - Local Area Network) par une liaison haut débit. Le réseau (10) est par exemple un réseau local IP (pour *Internet Protocol*, désignation du protocole de base pour les réseaux de type Internet et par extension, nom du réseau lui-même) et la liaison haut débit est de type ADSL (de l'anglais *Asymmetric DigitalSubscriber Line*). Le réseau étendu (1) est également dans cet exemple de type IP et contient un serveur de contenus multimédia (3) qui héberge notamment des contenus pour mise à disposition des terminaux du réseau local (10) et un serveur (2) d'un opérateur de service et/ou de réseau, qui contient notamment des applications de cet opérateur qui peuvent être mises à disposition des dispositifs du réseau local.

La passerelle de service (6) comporte une fonction de communication Wi-Fi, ou point d'accès (en anglais : AP, pour *Access Point*), qui lui permet de communiquer sans fil avec les terminaux du réseau. Ce point d'accès inclut un module radio bidirectionnel pour émettre ou recevoir les signaux dans le réseau local.

Par la suite, on entend par dispositif terminal, ou plus simplement « terminal », tout dispositif apte à se connecter à la passerelle (6), tel un ordinateur ou un dispositif du type téléviseur (TV), ordinateur personnel (PC), *Smartphone* (téléphone mobile intelligent), PDA (« Personnal Digital Assistant ») ou plus généralement tout dispositif apte à communiquer avec ou sans fils avec la passerelle de service. Parmi ces terminaux, un dispositif de restitution (7) est par exemple un téléviseur (TV). Un autre dispositif de restitution pourrait être un ordinateur de l'utilisateur, non représenté. Un dispositif mobile (4) est par exemple un *smartphone* ou une tablette numérique, ou encore un ordinateur portable, qui peut être ou non connecté à un réseau mobile (non représenté).

Une application dite « compatible », fournie par un opérateur de réseau et/ou de services (2), s'exécutant sur le dispositif mobile (4), dans ce contexte une application TV de contenus dits « live », c'est à dire de type « chaîne de télévision », ou à la demande, permet à l'utilisateur de sélectionner un contenu multimédia destiné à être rendu sur le TV (7) associé au périphérique de déport (5), connecté dans notre exemple sur un port vidéo HDMI du téléviseur (7) et se présentant sous la forme d'une clé électronique (en anglais, « dongle »). Suite à une sélection d'une fonction spécifique sur le mobile (une touche sélectionnable par pression), le contenu multimédia est dirigé vers la clé HDMI et peut être joué sur le téléviseur. La clé électronique peut alors se connecter elle-même au serveur de contenus (3) du WAN (1) sur lequel elle récupère directement les contenus, éventuellement avec une qualité ou une résolution plus élevée que celle, initiale, du mobile (4), et sans passer par le dispositif mobile. Sur la figure 1, la flèche courbe représente le chemin du contenu depuis le serveur de contenus (3) jusqu'au téléviseur en passant par la passerelle de service (6) puis le dispositif de déport (5). Le contenu est récupéré en téléchargement continu, ou *streaming,* depuis le serveur de contenus.

Ce déport du contenu présente plusieurs avantages :
- Le mobile peut être déchargé d'une tâche très consommatrice en ressources (décodage, affichage de la vidéo, etc.) ce qui lui permet de rendre d'autres fonctions pour l'utilisateur dans le même temps (e.g. visualisation d'un courrier, traitement d'un texto, etc.) ;
- la qualité et/ou la résolution du contenu multimédia peuvent être plus élevées sur le TV que sur le dispositif mobile, améliorant ainsi le confort pour l'utilisateur ;
- Le mobile peut servir de télécommande pour des fonctions de base relatives au contenu, comme par exemple l'arrêt de la restitution (« pause »), la reprise (« play »), le contrôle du volume (silence « mute », augmentation du volume « vol+ », diminution du volume « vol- »), etc.

Classiquement, la mise en œuvre de cet état de la technique comporte plusieurs étapes, qui vont être détaillées maintenant à l'appui de la figure 2.

On suppose que la clé électronique, équipée de tous les logiciels de bas niveau (*firmware*) et de haut niveau (programmes) nécessaires à son fonctionnement, a été connecté au port HDMI du téléviseur et l'application compatible correctement chargée et lancée sur le dispositif mobile ; il s'agit par exemple d'un catalogue de contenus audiovisuels, ou d'une application Web proposant de tels contenus (*YouTube©,* etc.).

On suppose aussi que lors d'une étape préalable (non représentée), les deux dispositifs, mobile et de déport, se sont tous deux connectés au réseau local, c'est-à-dire à la passerelle de service (6) du réseau local. Les connexions à la passerelle de service sont symbolisées par les liens 11 et 12.

Cette connexion est classiquement effectuée en mode dit « infrastructure », par opposition au mode « direct » préalablement mentionné. Le terminal mobile (4) se connecte classiquement à la passerelle de service (6) du réseau local (10), via une liaison filaire ou sans fil. Selon l'état de l'art, pour accéder une première fois à la passerelle (6) à partir d'un terminal (par exemple 4), un utilisateur saisit, au niveau du terminal, les paramètres d'identification du réseau WiFi. En particulier, il saisit ou sélectionne le nom du réseau domestique, connu de l'homme du métier sous l'abréviation SSID (ou ESSID, BSSID) pour « Service Set IDentifier » et qui prend souvent la forme d'une chaîne alphanumérique (par exemple : « Livebox_666 ») et, de manière optionnelle, un mot de passe sous forme de code d'accès au réseau domestique, telle qu'une clé d'accès WEP (pour « Wired Equivalent Privacy ») ou WPA (pour « WiFi Protected Access ») dont la fonction et la structure sont bien connues de l'homme du métier. Une fois le dispositif ainsi associé, il peut se connecter directement à la passerelle de service en diffusant notamment une requête contenant l'identifiant (SSID, BSSID, ESSID, etc.) pour lequel il est déjà configuré.

Si la clé électronique ne connaît pas encore le réseau local, c'est-à-dire s'il s'agit de sa première connexion, elle se positionne pour sa part en mode WiFi (par défaut, en mode WiFi routeur, aussi appelé mode *hotspot* selon la terminologie anglaise). Le dispositif mobile prend, en utilisant la liaison WiFi, le contrôle de la clé électronique, et lui fournit les identifiants du réseau local.

On notera que cette solution impose d'une part au terminal mobile de se connecter à la passerelle de service, et d'autre part au dispositif de déport d'être configuré par une initialisation en mode « hotspot ». Cette phase d'initialisation (appelée en anglais « Set Up ») permet de fournir au mobile les identifiants de la nouvelle passerelle.

Une fois que les deux équipements sont connectés au réseau via la passerelle de service, ils établissent une communication. A cette fin, le dispositif mobile procède tout d'abord à une découverte (D) de la présence sur le réseau d'un ou plusieurs périphériques de ce type. Cette étape de découverte correspond à une opération bien connue de l'homme du métier, qui peut être mise en œuvre sous forme d'une requête conforme à un protocole de réseau local, par exemple la norme UPnP. On rappelle que la norme UPnP a pour but de permettre à des terminaux de se connecter aisément et de communiquer simplement au sein d'un réseau local. Elle constitue un ensemble de protocoles de communication basés sur le protocole IP et promulgué par le forum de normalisation UPnP (« UPnP Forum »). Pour contrôler les terminaux du réseau, UPnP utilise des points de contrôle (en anglais : Control Points, en abrégé CP). Un point de contrôle émet classiquement vers les différents terminaux du réseau des messages dits de découverte (*MSEARCH*) afin de récupérer en retour une description des terminaux correspondant à la requête. Ces messages de découverte sont émis le plus souvent en mode de communication point vers multipoint, mode aussi appelé multicast, du point de contrôle vers les terminaux. Un équipement terminal compatible avec la norme UPnP répond à ces messages de requête, et émet de surcroît, à fréquence régulière, des messages de présence (*ALIVE*) pour signifier qu'il est actif et connecté sur le réseau. Le point de contrôle (CP) du réseau local, qui est situé ici sur le smartphone (4) émet en mode multicast des messages de recherche (SEARCH) d'équipements d'un type donné, ici des clé électroniques de déport.

La clé (5) répond (R) à la requête en découverte (D).

Le dispositif mobile (4) choisit éventuellement une clé (et donc un téléviseur ou PC associé) parmi celles qui sont découvertes.

Un canal de communication (« WebSocket » - WS) est établi entre le dispositif mobile et la clé électronique afin d'échanger des commandes et/ou des données. Le protocole *Websocket* permet d'assurer des communications bidirectionnelles entre un client et un serveur sur un réseau utilisant le protocole HTTP (de l'anglais Hyper Text Transport Protocol), un protocole de communication client-serveur développé pour les réseaux Internet et en particulier le Web. Par extension, WebSocket est un standard désignant à la fois un protocole réseau et une interface de programmation qui peut être utilisée par une application sur n'importe quel client et serveur Web. Le protocole a été normalisé par l'organisme IETF (Internet Engineering Task Force) dans sa spécification RFC 6455 (de référence « IETF Request for Comments : 6455 ») et l'interface de programmation correspondante par l'organisme W3C (de référence : The Web Sockets API; W3C Candidate Recommendation 20 September 2012*).*

Par la suite, lorsque l'utilisateur sélectionne un contenu (C) et appuie sur la touche de redirection sur l'écran du mobile, l'application du dispositif mobile demande à la clé électronique de lancer l'application de déport de la restitution du contenu C repéré par son identifiant (C_ID) ; l'identifiant est transformé en URL (par exemple, http://www.monserveur.com/C_ID). Puis la clé électronique accède au un serveur de contenus (3) afin de récupérer le contenu numérique en streaming, grâce à cette URL. Le *streaming* correspond par définition à un téléchargement continu de contenus multimédia. Le terminal client (ici, la clé électronique) effectue une requête en téléchargeant dans une première étape un document décrivant les paramètres d'accès au service via le protocole HTTP, puis accède au contenu sur le serveur de contenus (3), le transmet au dispositif de restitution (7) et le service démarre effectivement, c'est-à-dire que le dispositif d'affichage (7) peut recevoir et afficher le contenu C.

Pendant le téléchargement du contenu, des commandes (CM) peuvent être émises vers la clé électronique (*pause, jeu, avance rapide,* etc.) et des messages de statut (MD) peuvent être reçus en provenance de la clé électronique (métadonnées, état du *player,* etc.)

Il apparaît clairement, à la lumière de cette description, que cette architecture et cette mise en œuvre selon l'état de l'art présentent un certain nombre de limitations :
- le dispositif mobile ne contrôle pas le canal de communication de communication qui est établie entre les deux dispositifs : le canal n'étant pas de type point à point, mais multipoint, n'importe quel dispositif du réseau peut interférer sur la communication ;
- le dispositif mobile ne contrôle pas par ailleurs le choix du réseau local, une situation qui peut être problématique lorsque plusieurs réseaux locaux sont présents et accessibles au même moment (par exemple, le réseau de l'utilisateur et celui de son voisin) ;
- une fois que la clé électronique est associée à une passerelle donnée, et donc à un réseau local donné, elle ne peut plus en changer facilement : pour basculer sur un autre réseau local, il faut de nouveau réaliser une phase de « setup », il est donc nécessaire de faire sortir la clé électronique de son association courante pour lui transmettre d'autres identifiants, opération au cours de laquelle on perd les identifiants de la première passerelle.

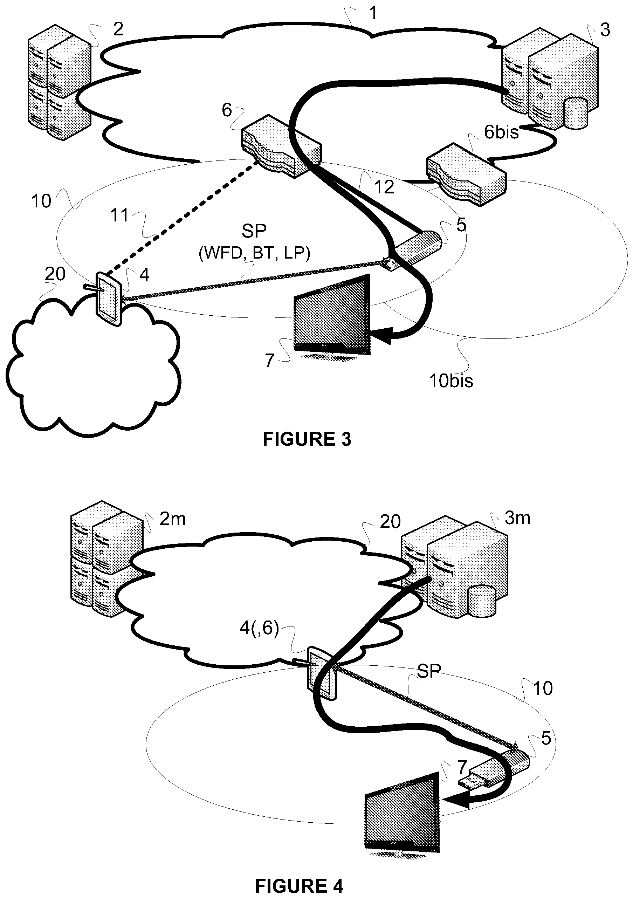

La figure 3 représente le contexte d'un premier mode de réalisation de l'invention qui permet de lever ces limitations.

Comme précédemment décrit à l'appui de la figure 1, un réseau local (10), piloté par une passerelle de service (6), comprend un dispositif mobile (4) et un dispositif de déport (5) selon l'invention. La passerelle de service (6) est, dans cet exemple, une passerelle domestique qui assure le routage des données dans le réseau local (10) et entre le réseau local (10) et le réseau WAN (1) dans lequel se trouvent le serveur de l'opérateur de réseau et/ou de services (2) et le serveur de contenus (3). La passerelle domestique (6) est par exemple un équipement routeur connu sous la désignation commerciale de *Livebox*©.

Le contexte du réseau local domestique est donné à titre d'exemple et pourrait être transposé aisément à celui d'un réseau d'entreprise.

Dans cet exemple, le dispositif mobile (4) est également connectable à un réseau mobile (20). Le réseau mobile est un réseau mobile de radiocommunication cellulaire, par exemple de troisième génération (3G, par exemple selon le standard UMTS « Universal Mobile Telecommunications System ») ou encore de quatrième génération (4G, par exemple selon le standard LTE pour « Long Term Evolution »), etc.

Comme décrit précédemment à l'appui de la figure 1, un utilisateur du réseau local possède au moins deux dispositifs, un dispositif mobile (4) et un dispositif de restitution (7), ici un TV. L'utilisateur cherche à afficher sur l'écran du dispositif de restitution (7) un contenu dont la sélection préalable a été effectuée sur le dispositif mobile : en utilisant une application sur son dispositif mobile, dans notre exemple une application TV qui a été préalablement fournie par l'opérateur de réseau et/ou de services (2), l'utilisateur sélectionne un contenu multimédia (audio, vidéo, etc.) disponible sur un serveur de contenus (3) destiné à être rendu sur le TV (7) associé au périphérique de déport (5), connecté dans cet exemple sur le port vidéo HDMI du téléviseur (7) de l'utilisateur et se présentant sous la forme d'une clé électronique (*dongle*).

Les contenus sont, selon cet exemple, des contenus « Live » c'est-à-dire destinés à être délivrés en temps réel aux clients de l'opérateur, ou utilisateurs du réseau local. Il s'agit par exemple d'une chaîne de télévision numérique. Le serveur de contenus (3) se trouve selon cet exemple dans le WAN (1) mais il pourrait, selon un autre exemple, être situé dans un réseau local d'entreprise, par exemple au niveau de la passerelle de service (6) ou tout autre équipement capable d'héberger un tel serveur de contenus.

A la différence de la solution de l'état de l'art décrite précédemment à l'appui de la figure 1, une première phase d'association du dispositif mobile et du dispositif de déport est établie entre les deux équipements de manière privée et sécurisée : la communication initiale, que l'on appelle aussi par la suite « session point à point », symbolisée par la double flèche (SP), s'effectue par un mode de communication de point à point bidirectionnelle.
- Il peut s'agir, selon un premier mode de réalisation, d'une communication en mode dit « ad-hoc » entre deux équipements pourvus d'une fonction WiFi. En mode « ad-hoc », aussi appelé « Widi-Direct » (WFD), et par opposition au mode « infrastructure » décrit préalablement à l'appui de la figure 1, les dispositifs sans fils se connectent les uns aux autres afin de constituer des liaisons point à point (« *peer to peer* » en anglais), c'est-à-dire un réseau dans lequel chaque dispositif joue en même temps le rôle de client et le rôle de serveur, ou point d'accès. Le mode « WiFi Direct », aussi appelé WiFi P2P (Peer to Peer), est une technologie développée par le consortium « WiFi Alliance » permettant le partage de données entre différents périphériques (ordinateurs, TV, mobiles, etc.) via leur connexion Wi-Fi sans point d'accès Wi-Fi intermédiaire (routeur, passerelle, etc.). Par défaut, selon ce mode de réalisation, le dispositif de déport est configuré (via son *firmware*) pour se positionner en mode WiFi (dit « Hotspot » c'est-à-dire qu'il se positionne comme un point d'accès WiFi) s'il ne parvient pas à se connecter en mode infrastructure à un réseau existant. Le dispositif mobile, dont le module WiFi est également actif, détecte sa présence et se met en « Wifi direct » c'est-à-dire qu'il impose au dispositif de déport une communication Wifi selon ce mode direct. Ce mode de réalisation procure l'avantage de permettre l'échange des données, notamment les identifiants du réseau local, via un canal sécurisé. La technologie Wi-Fi est en effet, de manière générale, bien connue de l'homme du métier pour ses capacités à offrir une bonne sécurité sur le canal si elle est configurée soigneusement. Elle possède une portée élevée (supérieure à dix mètres et pouvant atteindre en théorie plusieurs centaines de mètres) et permet de ce fait un éloignement assez important des deux périphériques connectés. Elle est robuste, fiable et rapide. Ce type de session permet donc d'échanger des informations, comme les identités du réseau local et du périphérique de déport de manière fiable entre les deux périphériques.
- Il peut encore s'agir, selon un second mode de réalisation, d'une communication de type Bluetooth (BT).
- Alternativement, ce canal peut être établi par tous les moyens à la portée de l'homme du métier : on peut citer par exemple le protocole Zigbee (un protocole qui permet la communication dans des réseaux locaux, sur un lien radio, avec une consommation réduite), la norme « DECT Ultra Low Energy » (en abrégé DECT ULE, une extension de DECT pour les applications à basse énergie), ou encore la norme « Bluetooth Low Energy » (en abrégé BLE), dont le but est de fournir une puissance réduite par rapport aux applications standard de la norme Bluetooth, etc. Les réseaux supportant ces différentes normes consomment peu d'énergie. On y fait parfois référence sous l'appellation générique de « réseaux à basse consommation », ou encore LoWPAN, acronyme pour « Low power Wireless Personal Area Networks ». Notamment, le groupe de travail de l'IETF *6LoWPAN* a défini récemment des mécanismes d'encapsulation et de compression d'en-têtes permettant à des paquets de données au format IPv6 (protocole IP, version 6) d'être envoyés et reçus via un protocole de communication sans fils sur un réseau *LoWPAN.* De manière préférentielle, le lien SP est un lien « LowPan » (LP).

Lors de cette session initiale en mode point à point (SP) le dispositif mobile transmet au dispositif de déport l'identifiant (SSID, BSSID, ESSID) du point d'accès de la passerelle de service (6), et éventuellement un mot de passe, ou une clé d'identification (la clé WEP), etc. Cette session entre les deux dispositifs étant privée, puisque établie en point à point, elle présente un certain nombre d'avantages par rapport à l'état de l'art décrit précédemment :
- La transmission des identifiants du réseau local sur cette session privée permet leur prise en compte automatique par le dispositif de déport (5), sans que celui-ci doive préalablement se connecter en mode « hotspot », conformément à l'état de l'art, pour récupérer les identifiants de la passerelle de service ;
- il est possible de transmettre au dispositif de déport plusieurs identifiants de réseaux locaux différents. Par la suite, le dispositif de déport pourra effectuer le choix d'un réseau parmi plusieurs, selon par exemple l'endroit où il se trouve, ou un ordre reçu de la part du dispositif mobile, ou encore une action au niveau du dispositif de déport lui-même (actionneur, interface, etc.) ; dans l'exemple de la figure 3, on a représenté une seconde passerelle de service (6bis) qui peut être par exemple celle de l'utilisateur, ou celle de l'un de ses voisins. Le dispositif de déport peut accéder à l'une ou l'autre passerelle. Ainsi, selon ses besoins, l'utilisateur pourra-t-il utiliser la passerelle de service 6 ou 6bis pour accéder au contenu sur le WAN. Cette possibilité est également intéressante si le serveur de contenus se trouve dans le réseau local 10bis piloté par la passerelle 6bis.
- il n'est pas nécessaire, pour le dispositif mobile, de se reconnecter par la suite au réseau local, contrairement à ce qui se passe dans l'art antérieur et déjà expliqué à l'appui de la figure 1 : il peut en effet transmettre l'identifiant du contenu à restituer sur la session point à point et par la suite le dispositif de déport ira lui-même chercher les contenus sur le réseau WAN. C'est pourquoi le lien (11) entre le dispositif mobile et la passerelle de service est indiqué en pointillés sur la figure (3) car facultatif.

Cette phase de communication préalable en mode session point à point, caractéristique de l'invention, est suivie d'une déconnexion de la session puis d'une reconnexion au réseau local, en mode infrastructure, du dispositif de déport, connexion symbolisée par le lien (12) à la passerelle de service. La déconnexion est obligatoire dans le cas d'une liaison Wi-Fi préalable, car le dispositif de déport ne peut se connecter à la fois en point à point en mode « Wifi Ad-hoc » au dispositif mobile et en mode « Wifi infrastructure » à la passerelle de service. Il faut donc, au préalable, le déconnecter. La déconnexion est facultative dans le cas du Bluetooth, puisque rien n'empêche alors le dispositif de déport de se connecter à la fois en Bluetooth au dispositif mobile et en WiFi à la passerelle. Par ailleurs, la déconnexion de deux dispositifs Bluetooth est généralement implicite (si les deux appareils s'éloignent d'une portée supérieure à la portée maximale permise par la norme).

On remarquera donc que la technologie Bluetooth, en plus d'être d'utilisation très simple, sécurisée et consommant très peu d'énergie, possède sur le WiFi un avantage pour ce qui concerne la gestion des réseaux locaux : si l'appareil de déport est déjà attaché à un réseau via une liaison WiFi (en mode infrastructure), il n'a plus aucune raison de se remettre en mode « Wifi-direct », et ne peut donc plus recevoir de nouveaux identifiants. Ainsi, dans le cas où l'utilisateur a connecté le dispositif de déport à un premier réseau qui reste disponible (e.g. l'utilisateur s'est connecté chez un voisin dont le réseau local (10bis) reste accessible depuis son propre domicile), le dispositif de déport y reste attaché même quand l'utilisateur ne souhaite plus y accéder. Il faut donc, dans un tel cas, dissocier explicitement le dispositif de déport de la passerelle (6bis) du voisin et le forcer à repasser en mode Wifi-Direct afin de recevoir les nouveaux identifiants via une session point à point. Au contraire, si le lien de communication est de type Bluetooth, un nouvel identifiant peut être transmis sur ce lien pour forcer le dispositif de déport à changer de passerelle de service.

Pour dialoguer sur la session ainsi établie entre le dispositif mobile et le dispositif de déport, un protocole applicatif de type HTTP peut être classiquement utilisé en association avec le protocole *WebSocket* (WS) préalablement décrit qui permet d'assurer les communications bidirectionnelles entre le client et le serveur HTTP, en l'occurrence le dispositif de déport et le dispositif mobile.

Une fois que le dispositif de déport (5) est connecté au réseau local, un contenu peut être choisi et déporté sur le téléviseur (7). Une application s'exécutant sur le dispositif mobile (4) permet à l'utilisateur de sélectionner un contenu multimédia (par exemple une chaîne TV) puis après sélection d'une fonction du mobile (activation d'une touche, bouton, zone tactile, commande vocale, etc.), le contenu multimédia est redirigé vers le dispositif de déport qui transforme éventuellement l'identifiant du contenu en adresse valide pour le serveur de contenus (3) du WAN (1) auquel il accède pour récupérer directement le contenu (CH1), préférentiellement avec une qualité ou une résolution plus élevée que celle, initiale, du mobile, et sans passer par le dispositif mobile. Le contenu peut être récupéré en *streaming* sur le serveur (3) du réseau étendu (WAN) et restitué sur l'écran du téléviseur ; la flèche courbe de la figure 3 symbolise le trajet du contenu numérique.

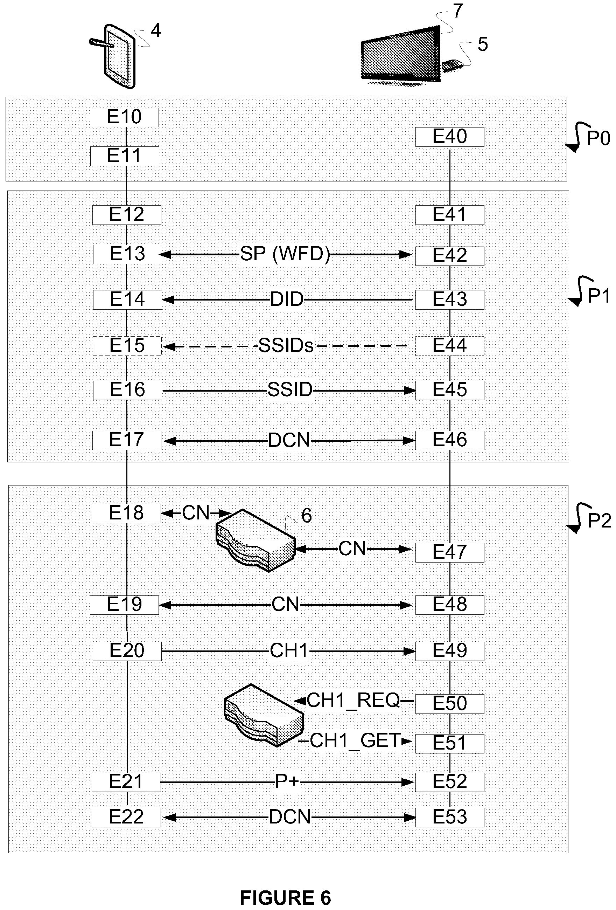

Ce mode de réalisation sera décrit plus en détails à l'appui de la figure 6.

La figure 4 représente un réseau local comprenant un dispositif mobile (4) et un dispositif de déport (5) connecté à un dispositif de restitution (TV, 7) selon un autre mode de réalisation de l'invention. Comme décrit précédemment, l'utilisateur sélectionne un contenu multimédia (audio, vidéo, etc.), disponible sur le serveur de contenus (3m) destiné à être rendu sur le TV (7) associé au périphérique de retransmission (5), connecté sur le port vidéo HDMI du téléviseur (7) de l'utilisateur et se présentant sous la forme d'une clé électronique (*dongle*). Le réseau local (10m) est piloté, non plus par une passerelle de service classique, mais par le dispositif mobile (4) qui joue le rôle de la passerelle de service, c'est-à-dire que c'est le dispositif mobile (4) qui donne aux autres dispositifs du réseau local l'accès à Internet, en agissant comme un routeur dans un mode dit « mode affilié « (en anglais, « *tethering* »). Un dispositif affilié, dans cet exemple le dispositif mobile (4), est un terminal qui donne à un autre terminal l'accès à Internet à l'extérieur du réseau local au moyen d'une communication par câble (par exemple USB, Ethernet) ou sans fil (comme Bluetooth ou WiFi).

Hormis la mutualisation des équipements dans ce mode de réalisation, puisque la passerelle domestique et le dispositif mobile sont confondus, les étapes d'établissement d'une session, ou canal de communication, point à point, de connexion du dispositif de déport à une passerelle domestique grâce aux identifiants qui lui ont été communiqués lors de ladite session point à point, puis de l'accès au contenu sur un serveur de contenus (3m) via la passerelle de service qui est confondue avec le dispositif mobile (4) sont identiques à celles décrites à l'appui de la figure 3.

Les serveurs (2m) de l'opérateur de réseau et/ou de services, qui se trouvent cette fois dans le réseau Internet mobile, peuvent être confondus ou non avec ceux du réseau Internet WAN (1) précédemment décrit. Il en va de même pour le serveur de contenus (3m) qui peut être confondu ou non avec le serveur de contenus (3) précédent.

Comme déjà décrit à l'appui de la figure 3, et illustré par la double-flèche (SP), une première phase d'association du dispositif mobile avec le dispositif de déport (5) est établie entre les deux dispositifs : cette communication initiale s'effectue en mode de communication point à point entre les deux équipements par exemple en mode WiFi-direct (*ad-hoc,* WFD), ou Bluetooth (BT). Puis, lorsqu'une session a été établie entre les deux dispositifs, le dispositif de déport (5) pourra accéder au contenu en *streaming* sur le serveur de contenus mobile (3m), via le dispositif mobile (4) en mode *tethering.* Le contenu récupéré en streaming peut alors être décodé, préparé et transmis au dispositif de restitution (le TV), comme précédemment.

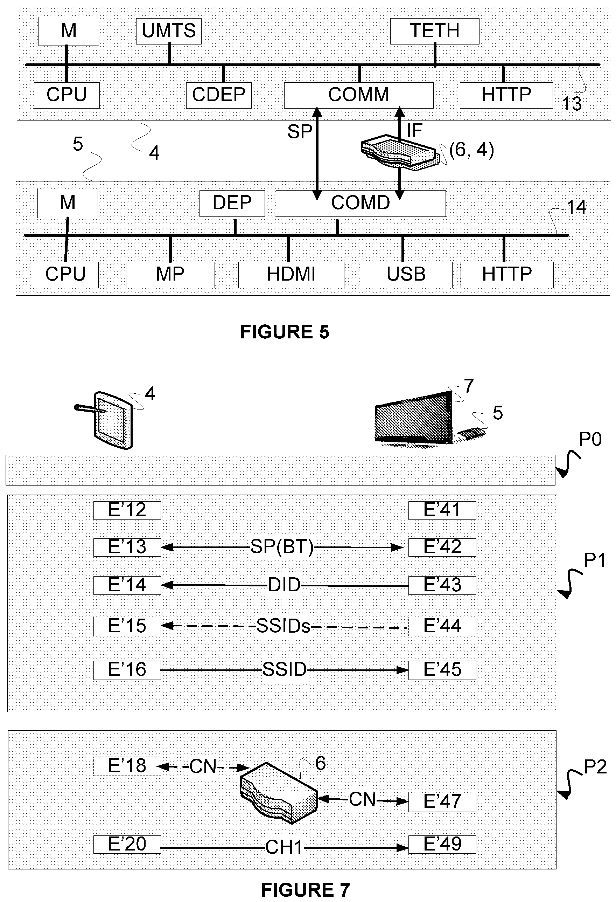

La figure 5 représente une architecture matérielle d'un dispositif de déport (5) connecté à un dispositif mobile (4) du réseau local selon l'invention.

Le dispositif mobile (4) comprend, classiquement, des mémoires M articulées autour d'un processeur CPU. Les mémoires peuvent être de type ROM (de l'anglais *Read Only Memory*) ou RAM (de l'anglais *Random Access Memory*), amovibles ou fixes, etc. Il communique avec le réseau local (1) via le module de communication (COMM) qui lui permet de se connecter avec fils (via un câble Ethernet) ou sans fils (via un canal radio de type WiFI, Bluetooth, Zigbee, etc.) à la passerelle de service ou à un autre dispositif du réseau local. Comme décrit auparavant à l'appui de la figure 2, un canal de communication point à point « ad-hoc » (SP) est utilisé pour une phase initiale d'établissement de la session entre les deux dispositifs (4) et (5). Ce canal peut être de type WIFi Direct, Bluetooth, etc. Puis, selon un mode de réalisation de l'invention, les deux dispositifs dialoguent en mode infrastructure (IF) via la passerelle de service (6). Selon un autre mode de réalisation de l'invention, c'est le dispositif mobile qui sert de passerelle en mode *tethering* et les deux dispositifs dialoguent en mode infrastructure sans la passerelle de service.

Le dispositif mobile (4) comprend à cet effet un mode de point d'accès ou *tethering* (TETH), qui lui permet de se transformer en passerelle, pour communiquer avec le WAN (1) qui peut être dans ce cas confondu avec le réseau IP mobile (20). Le dispositif mobile comprend encore un module radio-mobile (par exemple, UMTS) qui lui permet de dialoguer avec le réseau mobile (20). Il comporte enfin une application (CDEP) chargée du contrôle du déport, notamment de la communication avec le dispositif de déport (5). Le module CDEP, qui peut être logiciel et/ou matériel, est notamment capable d'effectuer les actions qui ont été décrites à l'appui des figures 3 et 4, ainsi qu'ultérieurement à l'appui de la figure 6 : choix d'un dispositif de déport (parmi plusieurs), demande d'établissement d'un canal de communication point à point avec ce dispositif pour transmission des identifiants du réseau local, récupération et mémorisation de l'identification du dispositif de déport, sélection d'un contenu et transmission d'un identifiant de ce contenu au dispositif de déport, contrôle de la restitution du contenu, etc.

Une partie de la mémoire MEM est reliée au point d'accès Wi-Fi et stocke, entre autres, les paramètres d'identification des passerelles domestiques auxquelles peut accéder le dispositif mobile, les paramètres d'identification et d'association des équipements domestiques au point d'accès lorsque le dispositif mobile est en mode « routeur » (*tethering*) (table d'identifiants comprenant les identifiant uniques des terminaux domestiques qui ont déjà été autorisés à accéder au réseau domestique via le point d'accès, éléments de routage, etc.), les paramètres d'identification des dispositifs de déport du réseau local (noms, caractéristiques, etc.).

Il comporte aussi un module de communication de type HTTP pour assurer les communications de type HTTP, par exemple de type Websocket (WS); on notera qu'une communication de type WS est possible sur un lien Bluetooth.

Tous les modules communiquent classiquement entre eux via un bus de données (13).

Le dispositif de déport (5) comprend aussi des mémoires M articulées autour d'un processeur CPU. Les mémoires peuvent être de type ROM, RAM, ou autres. Une partie de la mémoire M stocke, entre autres, les paramètres d'identification des passerelles domestiques auxquelles peut accéder le dispositif de déport et l'identification du dispositif de déport (par exemple, « dongle_numéro_36 », ou « clé#2 »). Il communique avec le réseau local (1) et le dispositif mobile (4) via le module de communication (COMD) qui lui permet notamment de se connecter sans fils (WiFi) à la passerelle de service (6) en mode infrastructure (via la liaison IF) ou directement au dispositif mobile (liaison SP) en mode « WiFi direct » ou Bluetooth. Dans notre exemple, il est alimenté via une interface série de type USB. Il comporte aussi :
- une application (DEP) chargé de la communication avec le dispositif mobile (4) et du déport du contenu. Ce module est notamment capable d'établir une communication, de préférence privée, avec le dispositif mobile via le module de communication COMD, d'accepter une requête pour aller chercher en *streaming* un contenu repéré par son identifiant sur le réseau à la place du dispositif mobile, de recevoir des commandes de contrôle de la restitution de la part du dispositif mobile agissant comme une télécommande, de lui transmettre des informations d'identification, d'état, etc.
- un « media player » (MP) capable de restituer (recevoir, décoder, préparer) les flux en mode de *streaming* et de les délivrer au dispositif de restitution (TV) ; le « média player » comporte entre autres un ensemble de décodeurs (audio, vidéo, etc.) aptes à décoder les contenus multimédia, ainsi qu'une interface de communication avec le dispositif mobile apte à interpréter les ordres en provenance de celui-ci (pause, retour arrière, contrôle du volume, etc.)
- un module d'interface avec le dispositif de restitution (HDMI) capable de s'interfacer physiquement et logiquement avec le téléviseur pour lui transmettre le contenu multimédia (audio et vidéo) décodé.
- un module de communication de type HTTP.

Tous les modules communiquent classiquement entre eux via un bus de données (14).

La figure 6 représente un chronogramme des échanges entre un dispositif de déport (5) connecté à un dispositif de restitution (TV) et un dispositif mobile (4) selon un mode de réalisation de l'invention. Selon ce mode de réalisation, la session point à point (SP) de l'invention est établie en mode « WiFi direct » aussi appelé « WiFi adhoc ». Le réseau local est piloté par une passerelle de service (6) distincte du dispositif mobile (4). Trois phases successives sont enchaînées : une première phase (P0) de préliminaires nécessaires à la mise en œuvre des prérequis de l'invention, puis une première phase (P1) de communication en point à point propre à l'invention, et une seconde phase (P2) de restitution du contenu.

### Préliminaires (P0)

Lors d'une étape initiale E40, un utilisateur du réseau local (que l'on appellera par la suite « l'utilisateur ») connecte le dispositif de déport (*dongle*, ou clé électronique) au port HDMI du TV (7). On suppose ici que le dispositif de déport est déjà équipé de tous les logiciels de bas et haut niveau qui lui sont nécessaires pour s'alimenter, communiquer avec le réseau, le TV, le dispositif mobile etc.

On suppose également que l'utilisateur a chargé sur le téléphone mobile (4), lors d'une étape E10, l'application mobile incluant ou faisant appel au module de contrôle du déport (CDEP) de la restitution du contenu. Il peut s'agir par exemple d'un guide de programmes numériques (EPG), permettant la sélection de différentes chaînes TV et/ou contenus numériques (films, musique, etc.), stockée sur le mobile à partir d'un serveur d'applications (2) de l'opérateur de services. Cette application peut être chargée par exemple à partir d'un serveur d'applications mobiles de type Android sur « Google Play » ou iOS sur « Apple store » de la société Apple, ou tout autre serveur d'applications mobiles.

Lors d'une étape E11, l'utilisateur lance l'application multimédia mobile (EPG), sélectionne un contenu et requiert la redirection de la restitution des contenus sur son téléviseur (7) via le dispositif de déport (5). Cette requête peut se faire par un moyen de sélection quelconque, par exemple un bouton qui apparait sur l'écran de son téléphone mobile, une commande vocale, etc.

### Phase de session point à point (P1)

Le but de cette phase est d'établir une session bidirectionnelle en point à point (SP) entre le dispositif mobile (4) et le dispositif de déport (5) afin de transmettre notamment les identifiants du réseau local au dispositif de déport et l'identifiant du dispositif de déport au dispositif mobile. Cette phase n'est effectuée qu'une seule fois pour un dispositif de déport et un réseau donnés : une fois que le dispositif de déport connait l'identité du réseau local, il peut se connecter en mode infrastructure à une passerelle (6, 6bis) sans avoir besoin de cette phase de connexion point à point. De même, une fois que le dispositif mobile connaît l'identité des dispositifs de déport disponibles dans le réseau local, il n'a plus de raison d'établir la session point à point, sauf s'il veut transmettre un nouvel identifiant de passerelle.

Lors d'une étape E41, le dispositif de déport se prépare à la connexion. Il allume (ou l'utilisateur le fait pour lui) un canal radio de type WiFi, et se positionne en mode WiFi « hotspot ».
∘ Selon une première variante, cette mise œuvre du WiFi point à point (« ad-hoc ») est automatique et suppose que le réseau local ne soit pas encore connu du dispositif ; en effet, par la suite, si le réseau local est connu du dispositif, il cherchera à s'y connecter automatiquement en mode infrastructure.
∘ Selon une seconde variante, la mise en œuvre du WiFi « hotspot » est effectuée par l'utilisateur qui positionne volontairement la clé électronique (le dispositif de déport 5) dans ce mode : on peut imaginer un bouton logiciel ou matériel, une commande, etc.

Lors d'une étape E12 correspondante de préparation, le dispositif mobile ouvre son canal de communication radio WiFi.

Le canal physique de communication point à point (SP) est établi entre les deux entités au cours des étapes E13 et E42 correspondantes.

Lors d'une étape E13, le dispositif mobile force l'établissement de la session point à point bidirectionnelle en mode WiFi Direct (SP, WFD) entre les deux dispositifs et le dispositif de déport bascule dans le mode WiFi direct à l'étape E42.

Lors d'une étape E43, le dispositif de déport envoie son identité (DID) au dispositif mobile. Il peut s'agir par exemple d'un numéro, d'une référence, etc., ou de manière plus générale n'importe quel signe d'indentification qui permette ultérieurement au dispositif mobile de choisir ce dispositif (par exemple clé#2) parmi plusieurs autres (clé#1, clé#2, clé#3, etc.) du même type. On notera que cette étape est facultative, notamment dans le cas où il y a un seul dispositif de déport connecté à un seul dispositif de restitution de l'utilisateur.

Cet identifiant est reçu par le dispositif mobile lors d'une étape E14. Le dispositif mobile peut mémoriser cet identifiant, par exemple dans une table en mémoire (M), pour une utilisation ultérieure ; il peut facultativement mémoriser le périphérique de restitution (TV) auquel est connecté le dispositif de déport (5).

Lors d'une étape E16, l'utilisateur choisit un réseau local pour la connexion ultérieure du dispositif de déport. Puis il transmet au dispositif de déport les identifiants du réseau local choisi, par exemple le SSID et le mot de passe (clé WEP) de la passerelle de service (6) de son réseau domestique, ou de celle du voisin, comme expliqué préalablement. Le dispositif de déport les reçoit et les enregistre éventuellement au cours d'une étape E45.

Selon une variante représentée aux étapes E44 et E15, c'est le dispositif de déport lui-même qui transmet au dispositif mobile une liste des identifiants de réseau (e.g. une liste de SSIDs) qu'il connaît, soit parce qu'il les a mémorisés, soit parce qu'il s'est mis, comme le dispositif de l'état de l'art décrit à l'appui des figures 1 et 2, en mode « hotspot » pour recevoir de tels identifiants. Selon cette variante, la liste est reçue par le dispositif mobile à l'étape E15.

Selon une autre variante, le dispositif de déport peut par exemple se positionner dans un mode d'association au cours duquel il peut être appairé à une passerelle domestique. Selon une première sous-variante, il peut être mis dans ce mode mécaniquement par une action externe (actionneur physique de type bouton d'association). Selon une autre sous-variante, il peut être mis dans ce mode par un actionneur logiciel, par une commande en provenance du dispositif mobile ou du dispositif de restitution, etc. Avantageusement selon cette variante, il n'est pas nécessaire de rentrer un mot de passe pour se connecter au réseau local. Par exemple, le protocole « WiFi Protected Setup » (WPS) autorise, de manière bien connue de l'homme du métier, deux dispositifs qui se trouvent à proximité l'un de l'autre, lorsqu'ils sont positionnés dans ce mode, à établir une communication sans rentrer le mot de passe (clé WEP, etc.) de la passerelle.

Selon encore une autre variante, le dispositif de déport se connecte automatiquement sur le réseau mobile dont la passerelle se trouve à proximité la plus immédiate.

Une fois que le dispositif de déport est connecté, la session point à point (SP) peut être refermée : lors d'une étape E17, le dispositif mobile ordonne la fermeture de la session point à point ad-hoc. Au préalable, on rappelle qu'il a mémorisé au moins un identifiant du dispositif de déport. La fermeture de la session, une fois que les identifiants ont été correctement échangés, permet aux deux dispositifs de pouvoir quitter le mode point à point pour établir une autre session WiFi, dans un mode différent, notamment avec la passerelle de service pour se connecter au réseau local.

Lors d'une étape E46, le dispositif de déport ferme la session point à point « ad-hoc ». Il a mémorisé au moins un identifiant de réseau local et/ou de la passerelle de service (6, 6bis).

### Phase de restitution (P2)

Le but de cette phase est de restituer effectivement le contenu sélectionné sur le dispositif mobile sur le dispositif de restitution associé au dispositif de déport. A cet effet, le périphérique de déport (5) doit se connecter à la passerelle de service (6) pour pouvoir accéder au serveur de contenus.

Lors d'une étape E18, le dispositif mobile se connecte à la passerelle de service en mode infrastructure (IF). Cette étape est facultative si l'identifiant du contenu a été transmis préalablement au dispositif mobile. Sinon elle est obligatoire puisque la session point à point est refermée et ne peut plus être utilisée à cet effet.

Lors d'une étape E47, le dispositif de déport se connecte également à la passerelle de service dont il a mémorisé les identifiants, en mode infrastructure (IF).

Lors d'une étape E19, l'application multimédia de contrôle du déport (CDEP, sous forme d'un EPG par exemple) du dispositif mobile (4) choisit le dispositif de déport qu'elle souhaite utiliser (par exemple, « clé#2 »), éventuellement parmi plusieurs, et se reconnecte au dispositif de déport (clé#2) à travers le réseau domestique, grâce à l'adresse (DID) du dispositif de déport que le dispositif mobile a mémorisée au préalable.

De manière optionnelle, lors de l'étape E48 d'établissement de la connexion du dispositif de déport avec le mobile, une autorisation de connexion peut être demandée au dispositif de déport qui peut accepter ou refuser la demande de connexion. Cette demande de connexion peut avoir été effectuée au préalable via le canal de communication point à point WiFi-direct (WFD).

Lors d'une étape E20, l'utilisateur choisit un programme (CH1), par exemple une chaîne de télévision, à partir de son application mobile (EPG), et choisit de déporter le flux audiovisuel de ce programme vers le dispositif de déport relié au téléviseur. Ce choix peut être fait par la sélection d'un bouton sur l'écran du mobile, présenté en vis-à-vis du programme CH1, par une commande vocale, une touche de clavier, etc. Le choix de ce programme (CH1) se traduit au niveau du dispositif mobile (5) par l'émission d'un identifiant du contenu sélectionné, par exemple un numéro, ou une adresse du flux vidéo à télécharger. Dans le cas de notre mode de réalisation, afin de limiter la complexité des actions demandées au dispositif de déport, qui est dépourvu au maximum de capacités complexes de traitement, une adresse complète du contenu est transmise sous forme d'URL. Comme il s'agit d'accéder au serveur de contenus dans le WAN, il est possible de récupérer des contenus à un débit plus élevé que celui initialement proposé au dispositif mobile afin de bénéficier d'une résolution, d'une qualité plus élevée, d'un programme enrichi, ou de tout autre élément qui peut améliorer la qualité de service pour l'utilisateur. La requête HTTP (CH1_REC) pour le programme courant « monfilm » de la chaîne CH1 peut être de type :
http://monserveur.com/machaîneCH1@4Mbits/monfilm.m4s,
pour indiquer par exemple que le dispositif de déport doit recevoir en streaming le film « monfilm » de la chaîne « CH1 » du serveur « monserveur » avec un débit de 4Mbits/s en utilisant l'adresse http fournie. Cet exemple correspond par exemple à un contexte de *streaming* adaptatif selon la norme MPEG-DASH. Il est fréquent en effet, dans le contexte du protocole HTTP, de recourir, pour échanger les données entre le terminal client et le serveur, à une technique de type dit « streaming adaptatif » (HAS pour « Http Adaptive Streaming »). Ce type de technique permet notamment d'offrir une bonne qualité de service à l'utilisateur tout en tenant compte, par exemple, des variations de bande passante sur la liaison entre le terminal client et le serveur de contenus. Il existe plusieurs solutions pour faciliter la mise à disposition et distribution d'un tel contenu en streaming, comme par exemple les solutions propriétaires Microsoft Smooth Streaming (MSS) et Apple HTTP Live Streaming (HLS), ou encore la norme MPEG DASH (pour Dynamic Adaptive Streaming over HTTP - norme ISO/IEC 23009-1:2012(E)), une norme de l'organisme ISO/IEC dédiée au streaming de contenus multimédia sur Internet.

On notera que ce téléchargement s'opère traditionnellement au travers d'une URL http comme présenté ci-dessus, mais pourrait également s'opérer au travers d'une adresse universelle (URI) décrivant un autre réseau et/ou protocole de communication (dvb://monsegmentdecontenuC1 par exemple pour un contenu de télévision diffusée via un réseau de diffusion de type DVB). Un tel procédé de manipulation d'adresses universelles est bien connu de l'homme du métier.

L'ordre de déport est reçu par le dispositif de déport lors d'une étape E49, à partir de de la première adresse reçue. En variante, et notamment si le dispositif de déport possède les moyens matériels et logiciels adéquats, l'adresse reçue peut être modifiée avant l'accès au contenu (par introduction, par exemple, de paramètres supplémentaires).

Lors de l'étape suivante E50, le dispositif de déport transmet une requête au serveur de contenus (3) via la passerelle de service identifiée au préalable. Cette requête correspond au contenu audiovisuel identifié par le dispositif mobile et dont l'adresse http a été générée comme expliqué prélablement.

Lors d'une étape E51 suivante, le dispositif de déport (5) reçoit le programme en provenance du serveur de contenus (3), via la passerelle de service (6), en *streaming.* Le « Media Player » (MP) du dispositif de déport (5) décode, met en forme et fait jouer le contenu au fur et à mesure de sa réception et le transmet, via le port HDMI, au dispositif de restitution qui lui est associé (TV). On rappelle que HDMI est une norme de communication numérique apte à transmettre des signaux audio et vidéo non compressés avec une définition élevée, normalisée par le forum HDMI.

Lors d'une étape facultative suivante E52, le dispositif de déport reçoit des commandes en provenance du dispositif mobile, transformé pour l'occasion en télécommande. Par exemple, il lui demande dans cet exemple de la figure 5 de passer au programme suivant (« P+ »).

Selon ce mode de réalisation, la commande saisie par l'utilisateur au niveau de son terminal mobile se traduit par la génération d'une nouvelle adresse complète à destination du dispositif de déport. Par exemple, si l'utilisateur a choisi de passer au programme suivant, l'URL peut se présenter sous la forme :
http://monserveur.com/machaîneCH2@4Mbits/masérie.m4s,
pour indiquer au dispositif de déport qu'il doit passer au streaming du contenu de la chaîne 2 (CH2) qui suit la chaîne 1 (CH1) sur le serveur *monserveur.*

Comme il n'existe plus, dans ce mode de réalisation, de session directe entre le dispositif mobile et le dispositif de déport, l'ordre doit transiter par la passerelle au sein du réseau local.

A la fin de la session de streaming (fin du film, etc.), l'application sur le dispositif de déport s'arrête et libère la connexion HDMI s'il n'y a plus de contenu en attente. Le dispositif de déport est prêt à recevoir une nouvelle commande de la part du mobile, ou à repasser dans un mode de session point à point sous le contrôle d'un autre dispositif mobile ou du même dispositif mobile (qui souhaiterait par exemple changer de réseau local).

Ce mécanisme peut être facilement transposé à un contenu d'un type différent, par exemple VOD. Si le contenu est protégé (ce qui peut être le cas de la VOD ou du « live »), les mécanismes habituels de gestion des droits numériques (DRM) peuvent être mis en place sans pour autant sortir du cadre de l'invention.

Ce mécanisme peut être aussi être facilement transposé au cas où le dispositif mobile (4) se positionne comme point d'accès au réseau en mode de *tethering.* Dans ce cas, le dispositif mobile remplace la passerelle de service (6) mais les échanges ne sont pas modifiés.

La figure 7 représente un chronogramme des échanges entre un dispositif de déport (5) et un dispositif mobile (4) selon un second mode de réalisation de l'invention. Selon ce mode de réalisation, le canal de communication point à point (SP) selon l'invention est établi en Bluetoooth (BT). Le réseau local est piloté comme précédemment par une passerelle de service (6) distincte du dispositif mobile (4) mais se déclinerait de la même manière dans le contexte du dispositif mobile placé en *tethering* et remplissant à la fois les fonctions de sélection des contenus et de routage.

De même que précédemment, trois phases successives sont enchaînées : une première phase (P0) de préliminaires nécessaires à la mise en œuvre des prérequis de l'invention, puis une première phase (P1) de communication privée sur le canal de communication point à point (SP), et enfin une phase P2 de consommation du contenu. Seules les différences significatives entre les deux modes de réalisation seront illustrées ici.

La phase de préliminaires P0 est identique à celle du mode de réalisation précédent.

### Phase de session point à point (P1)

Comme précédemment, le but de cette phase est d'établir une session point à point (SP) entre le dispositif mobile (4) et le dispositif de déport (5) afin de transmettre notamment les identifiants de la passerelle du réseau local au dispositif de déport (5) et l'identifiant du dispositif de déport au dispositif mobile (4).

Lors d'une étape E'41, le dispositif de déport se prépare à la connexion. Il allume (ou l'utilisateur le fait pour lui) un canal radio de type Bluetooth. On rappelle ici les caractéristiques principales de ce standard bien connu par ailleurs de l'homme du métier : il est basé sur un mode de fonctionnement maître/esclave ; dans le contexte de l'invention, le maître est le dispositif mobile et l'esclave le périphérique de déport. Le dispositif de déport se contente d'ouvrir le canal radio. Il se trouve alors dans un mode dit « mode passif », c'est-à-dire qu'il est à l'écoute du réseau.

Lors d'une étape E'12 correspondante de préparation, le dispositif mobile ouvre le canal de communication radio en mode Bluetooth.

Le canal physique de communication point à point pour la session (SP) est établi entre les deux entités au cours des étapes E'13 et E'42 correspondantes. L'établissement d'une connexion entre deux périphériques Bluetooth suit une procédure permettant d'assurer un certain niveau de sécurité. La connexion débute par une phase de recherche aussi appelée « phase d'inquisition » (en anglais « inquiry »), pendant laquelle le périphérique maître (ici le dispositif mobile) envoie une requête à tous les périphériques présents dans la zone de portée Bluetooth. Tous les périphériques recevant la requête répondent avec leur adresse. Le périphérique maître choisit alors une adresse et se synchronise avec le périphérique choisi. Un lien s'établit ensuite avec le périphérique choisi, permettant au maître d'entamer une phase de découverte des services, selon un protocole appelé SDP (« Service Discovery Protocol »). A l'issue de cette phase de découverte de services, le périphérique maître est en mesure de créer un canal de communication avec le dispositif accédé (appelé point d'accès selon la terminologie Bluetooth) en utilisant les protocoles de communication Bluetooth.

Il se peut que le point d'accès intègre de plus un mécanisme de sécurité, appelé *appairage* (en anglais *pairing*), permettant de restreindre l'accès aux seuls utilisateurs autorisés. L'appairage se fait à l'aide d'une clé de chiffrement (communément appelée code « PIN » pour Personal Information Number). Le point d'accès envoie une requête d'appairage au périphérique maître. Ceci peut déclencher une intervention de l'utilisateur pour saisir le code PIN du point d'accès. Si le code PIN reçu est correct, l'association a lieu. Lorsque l'appairage est effectif, le périphérique maître peut utiliser le canal de communication ainsi établi.

Le standard Bluetooth définit par ailleurs un certain nombre de profils d'application (*Bluetooth profiles*), permettant de définir le type de services offerts par un périphérique Bluetooth. Chaque périphérique peut supporter plusieurs profils. Dans le cadre de ce mode de réalisation, on choisira avantageusement le profil série (« Serial Port Profile » - SPP) qui permet de réaliser des échanges de données bidirectionnels entre deux dispositifs. Naturellement, un autre profil Bluetooth peut être choisi alternativement.

Lors d'une étape E'43 identique à l'étape E43 de la figure précédente, le dispositif de déport envoie son identité (DID) au dispositif mobile. Cet identifiant est reçu par le dispositif mobile lors d'une étape E'14 identique à l'étape E14.

La variante représentée aux étapes E'44 et E'15 est identique à celle des étapes E44 et E15.

Lors d'une étape E'16 identique à l'étape E16, l'utilisateur choisit éventuellement une passerelle de service parmi plusieurs possibles, pour la connexion ultérieure du dispositif de déport au réseau local correspondant. Puis il transmet au dispositif de déport les identifiants du réseau local choisi, par exemple le SSID et le mot de passe (clé WEP) de la passerelle (6, 6bis), comme expliqué préalablement.

Les étapes de fermeture de session ne sont pas représentées car facultatives : en effet, dans le cas du Bluetooth, la session peut être ou non refermée : les deux dispositifs peuvent rester avantageusement connectés en Bluetooth pour continuer à échanger des informations via ce canal, ce qui n'empêche pas le dispositif de déport (5) de se connecter en mode WiFi infrastructure à la passerelle de service (6) pour recevoir le contenu en streaming à partir du serveur. Par ailleurs, la déconnexion de deux dispositifs reliés en Bluetooth peut-être soit explicite (parce que l'un des appareils ferme le canal BT) ou implicite (notamment si les deux appareils s'éloignent d'une portée supérieure à la portée maximale permise par la norme).

### Phase de restitution (P2)

Le but de cette phase est de restituer effectivement le contenu sélectionné par le dispositif mobile sur le dispositif de restitution associé au dispositif de déport.

A cet effet, comme précédemment, le périphérique de déport doit se connecter à la passerelle de service (6, 6bis, 4) pour pouvoir accéder au serveur de contenus (3, 3m) dans le WAN.

L'étape E'47 de connexion du dispositif de déport est identique à l'étape E47.

En revanche, l'étape E'18 de connexion du dispositif mobile à la passerelle de service en mode d'infrastructure est facultative dans le cas où la connexion Bluetooth resterait établie entre les deux dispositifs. Le dispositif mobile peut être connecté par exemple au réseau mobile (1) dont il reçoit les identifiants de contenus (CH1, URL, etc.), les transmettre au dispositif de déport via la session Bluetooth et recevoir les informations du dispositif de déport sur cette même session Bluetooth.

De même, lors d'une étape E'20, lorsque l'utilisateur choisit un programme (CH1), par exemple une chaîne de télévision, sur son application (EPG), et choisit de rediriger le flux audiovisuel de ce programme vers le dispositif de déport relié au téléviseur (7), cette requête peut être effectuée sur la session Bluetooth si elle est toujours ouverte, à la différence de l'étape E20 précédente.

Les autres étapes, non représentées, sont identiques à celles de la figure 6, à l'exception de l'étape E'52 : le canal Bluetooth, s'il est toujours ouvert, peut également être utilisé pour transmettre des commandes (Vol+, Vol-, etc.) du dispositif mobile (4) au dispositif de déport et recevoir de celui-ci des informations diverses (métadonnées, état du *Media Player*, etc..

Il va de soi que les modes de réalisation qui ont été décrits ci-dessus ont été donnés à titre purement indicatif et nullement limitatif. L'invention est définie par les revendications qui suivent.

## Revendications

1. Procédé de déport de la restitution d'un contenu numérique, ledit contenu étant disponible sur un serveur de contenus (3) accessible via au moins une passerelle de service (4,6) et pouvant être traité par au moins deux dispositifs (4,7) d'un utilisateur, un premier dispositif dit dispositif mobile (4) et au moins un second dispositif dit dispositif de restitution (7), le dispositif de restitution (7) étant connecté à un dispositif de déport (5), ledit contenu étant sélectionné sur le dispositif mobile (4) et restitué sur le dispositif de restitution (7), le procédé étant **caractérisé en ce qu'**il comporte, au niveau du dispositif de déport, les étapes suivantes :
- ouverture (E42, E'42) d'un canal de communication point à point (SP) entre le dispositif mobile (4) et le dispositif de déport (5) ;
- réception (E45, E'45) sur le canal de communication (SP) d'un identifiant (SSID, WEP) d'une passerelle de service quelconque (6, 6bis, 4);
- connexion (E47, E'47) du dispositif de déport (5) à un réseau local (10, 10b, 10m) en utilisant l'identifiant de passerelle reçu ;
- réception (E49, E'49) d'un identifiant d'un contenu numérique (CH1) à restituer ;
- accès (E50, E51) au contenu identifié sur le serveur de contenus (3) via la passerelle identifiée (4, 6, 6bis).

2. Procédé de déport selon la revendication 1, **caractérisé en ce que** la phase d'ouverture d'un canal de communication entre le dispositif mobile et le dispositif de déport est suivie d'une étape d'émission (E43, E'43) sur le canal de communication d'un identifiant (DID) du dispositif de déport (5).

3. Procédé de déport selon la revendication 1, **caractérisé en ce que** le canal de communication (SP) entre le dispositif mobile (4) et le dispositif de déport (5) est établi sur un lien à basse consommation (LP, BT).

4. Procédé de déport selon la revendication 1, **caractérisé en ce qu'**il inclut en outre une étape de mémorisation (E45, E'45) de l'identifiant du réseau local (SSID, WEP) dans une mémoire (M) du dispositif de déport (5).

5. Procédé de déport selon la revendication 1, **caractérisé en ce que** la réception (E49) d'un identifiant d'un contenu à restituer (CH1) se fait sur le canal de communication point à point (SP).

6. Procédé de déport selon la revendication 1, **caractérisé en ce que** la phase d'ouverture d'un canal de communication point à point (SP) entre le dispositif mobile (4) et le dispositif de déport (5) est suivie d'une sous-étape d'appairage (E48) au cours de laquelle l'utilisateur positionne le dispositif de déport (5) dans un état d'appairage (WPS-PBC).

7. Procédé de contrôle du déport de la restitution d'un contenu numérique, ledit contenu étant disponible sur un serveur de contenus (3) accessible via au moins une passerelle de service (6, 6bis) et pouvant être traité par au moins deux dispositifs (4,7) d'un l'utilisateur, un premier dispositif dit dispositif mobile (4) et au moins un second dispositif dit dispositif de restitution (7), le dispositif de restitution (7) étant connecté (HDMI) à un dispositif de déport (5), ledit contenu étant sélectionné sur le dispositif mobile (4) et restitué sur le dispositif de restitution (7), le procédé étant **caractérisé en ce qu'**il comporte, au niveau du dispositif mobile, les étapes de :
- ouverture (E13, E'13) d'un canal de communication point à point (SP) entre le dispositif mobile (4) et le dispositif de déport (5) ;
- émission (E16, E'16) sur le canal de communication point à point d'un identifiant (SSID1, SSID2, WEP) d'une passerelle de service quelconque ;
- émission (E20, E'20) d'un identifiant d'un contenu (CH1) à restituer.

8. Procédé de contrôle selon la revendication 7, **caractérisé en ce que** l'identifiant (SSID) de passerelle émis est celui du dispositif mobile (4).

9. Procédé de contrôle selon la revendication 7, **caractérisé en ce qu'**il comporte une étape de connexion (E18, E'18) du dispositif de déport (5) à un réseau local (10, 10b, 10m) en utilisant l'identifiant (SSID) de passerelle reçu.

10. Procédé de contrôle selon la revendication 7, **caractérisé en ce qu'**il inclut en outre :
- une étape de réception (E14, E'14) sur le canal de communication point à point (SP) d'un identifiant (DID) du dispositif de déport (5) ;
- une étape de choix (E19) d'un dispositif de déport (5) parmi plusieurs, en fonction d'un identifiant reçu (DID).

11. Dispositif de déport (5) d'un contenu numérique disponible sur un serveur de contenus (3) accessible via au moins une passerelle de service (6, 6bis) et pouvant être traité par au moins deux dispositifs (4,7) d'un l'utilisateur, un premier dispositif dit dispositif mobile (4) et au moins un second dispositif dit dispositif de restitution (7), le dispositif de restitution (7) étant connecté à un dispositif de déport (5), ledit contenu étant sélectionné sur le dispositif mobile (4) et restitué sur le dispositif de restitution (7), **caractérisé en ce que** le dispositif comporte :
- un module d'ouverture (DEP, COMD) d'un canal de communication point à point (SP) entre le dispositif mobile (4) et le dispositif de déport (5) ;
- un module de réception (DEP, COMD), sur le canal de communication (SP), d'un identifiant d'une passerelle de service quelconque (SSID, WEP) ;
- un module de connexion du dispositif de déport (5) à un réseau local (10, 10b, 10m) en utilisant l'identifiant (SSID1, SSID2) de passerelle (6, 6b) reçu ;
- un module de réception (DEP, COMD) d'un identifiant d'un contenu (CH1) à restituer ;
- un module d'accès (HTTP, COMD, E50, E51) au contenu identifié sur le serveur de contenus (3) via la passerelle identifiée (4, 6, 6bis).

12. Dispositif de contrôle du déport d'un contenu numérique disponible sur un serveur de contenus (3) accessible via au moins une passerelle de service (6, 6bis) et pouvant être traité par au moins deux dispositifs (4,7) d'un l'utilisateur, un premier dispositif dit dispositif mobile (4) et au moins un second dispositif dit dispositif de restitution (7), le second dispositif de restitution (7) étant connecté à un dispositif de déport (5), ledit contenu étant sélectionné sur le dispositif mobile (4) et restitué sur le dispositif de restitution (7), **caractérisé en ce que** le dispositif de contrôle comporte :
- un module d'ouverture (CDEP, COMM) d'un canal de communication point à point (SP) entre le dispositif mobile (4) et le dispositif de déport (5) ;
- un module d'émission (CDEP, COMM) sur le canal de communication d'un identifiant d'une passerelle de service quelconque (SSID, WEP);
- un module d'émission (CDEP, COMM) d'une identification d'un contenu (CH1) à restituer.

13. Terminal (4) incluant un dispositif de contrôle du déport selon la revendication 12.

14. Clé électronique (5) incluant un dispositif de déport selon la revendication 11.

15. Programme d'ordinateur comportant des instructions de code pour la mise en œuvre du procédé de déport de la restitution d'un contenu conforme à la revendication 1, lorsque celles-ci sont exécutées par un processeur, ou pour la mise en œuvre du procédé de contrôle de déport de la restitution d'un contenu conforme à la revendication 7, lorsque celles-ci sont exécutées par un processeur.

## Patentansprüche

1. Verfahren zum versetzten Abspielen eines digitalen Inhalts, wobei der Inhalt auf einem Server (3) von Inhalten verfügbar ist, auf den über mindestens ein Service-Gateway (4, 6) zugegriffen werden kann und der durch mindestens zwei Vorrichtungen (4, 7) eines Benutzers verarbeitet werden kann, eine erste Vorrichtung, die als mobile Vorrichtung (4) bezeichnet wird, und mindestens eine zweite Vorrichtung, die als Abspielvorrichtung (7) bezeichnet wird, wobei die Abspielvorrichtung (7) mit einer Versatzvorrichtung (5) verbunden ist, wobei der Inhalt auf der mobilen Vorrichtung (4) ausgewählt wird und auf der Abspielvorrichtung (7) abgespielt wird, wobei das Verfahren **dadurch gekennzeichnet ist, dass** dieses, auf der Ebene der Versatzvorrichtung, die folgenden Schritte umfasst:
- Öffnen (E42, E'42) eines Punkt-zu-Punkt-Kommunikationskanals (SP) zwischen der mobilen Vorrichtung (4) und der Versatzvorrichtung (5);
- Empfangen (E45, E'45), auf dem Kommunikationskanal (SP), eines Identifikators (SSID, WEP) irgendeines Service-Gateways (6, 6bis, 4);
- Verbinden (E47, E'47) der Versatzvorrichtung (5) mit einem lokalen Netz (10, 10b, 10m) unter Verwendung des empfangenen Gateway-Identifikators;
- Empfangen (E49, E'49) eines Identifikators eines digitalen Inhalts (CH1), der abzuspielen ist;
- Zugreifen (E50, E51) auf den identifizierten Inhalt auf dem Server (3) von Inhalten über das identifizierte Gateway (4, 6, 6bis).

2. Versatzverfahren nach Anspruch 1,
**dadurch gekennzeichnet, dass** die Phase des Öffnens eines Kommunikationskanals zwischen der mobilen Vorrichtung und der Versatzvorrichtung von einem Schritt des Sendens (E43, E'43), auf dem Kommunikationskanal, eines Identifikators (DID) der Versatzvorrichtung (5) gefolgt wird.

3. Versatzverfahren nach Anspruch 1,
**dadurch gekennzeichnet, dass** der Kommunikationskanal (SP) zwischen der mobilen Vorrichtung (4) und der Versatzvorrichtung (5) auf einer Verbindung mit geringem Verbrauch (LP, BT) hergestellt wird.

4. Versatzverfahren nach Anspruch 1,
**dadurch gekennzeichnet, dass** dieses außerdem einen Schritt des Speicherns (E45, E'45) des Identifikators des lokalen Netzes (SSID, WEP) in einem Speicher (M) der Versatzvorrichtung (5) umfasst.

5. Versatzverfahren nach Anspruch 1,
**dadurch gekennzeichnet, dass** das Empfangen (E49) eines Identifikators eines Inhalts, der abzuspielen ist, (CH1) auf dem Punkt-zu-Punkt-Kommunikationskanal (SP) erfolgt.

6. Versatzverfahren nach Anspruch 1,
**dadurch gekennzeichnet, dass** die Phase des Öffnens eines Punkt-zu-Punkt-Kommunikationskanals (SP) zwischen der mobilen Vorrichtung (4) und der Versatzvorrichtung (5) von einem Teilschritt einer Paarbildung (E48) gefolgt wird, in dem der Benutzer die Versatzvorrichtung (5) in einen Paarbildungszustand (WPS-PBC) positioniert.

7. Verfahren zum Steuern des versetzten Abspielens eines digitalen Inhalts, wobei der Inhalt auf einem Server (3) von Inhalten verfügbar ist, auf den über mindestens ein Service-Gateway (6, 6bis) zugegriffen werden kann und der durch mindestens zwei Vorrichtungen (4, 7) eines Benutzers verarbeitet werden kann, eine erste Vorrichtung, die als mobile Vorrichtung (4) bezeichnet wird, und mindestens eine zweite Vorrichtung, die als Abspielvorrichtung (7) bezeichnet wird, wobei die Abspielvorrichtung (7) mit einer Versatzvorrichtung (5) verbunden ist (HDMI), wobei der Inhalt auf der mobilen Vorrichtung (4) ausgewählt wird und auf der Abspielvorrichtung (7) abgespielt wird, wobei das Verfahren **dadurch gekennzeichnet ist, dass** dieses, auf der Ebene der mobilen Vorrichtung, die folgenden Schritte umfasst:
- Öffnen (E13, E'13) eines Punkt-zu-Punkt-Kommunikationskanals (SP) zwischen der mobilen Vorrichtung (4) und der Versatzvorrichtung (5);
- Senden (E16, E'16), auf dem Punkt-zu-Punkt-Kommunikationskanal, eines Identifikators (SSID1, SSID2, WEP) irgendeines Service-Gateways;
- Senden (E20, E'20) eines Identifikators eines Inhalts (CH1), der abzuspielen ist.

8. Steuerverfahren nach Anspruch 7,
**dadurch gekennzeichnet, dass** der gesendete Gateway-Identifikator (SSID) jener der mobilen Vorrichtung (4) ist.

9. Steuerverfahren nach Anspruch 7,
**dadurch gekennzeichnet, dass** dieses einen Schritt des Verbindens (E18, E'18) der Versatzvorrichtung (5) mit einem lokalen Netz (10, 10b, 10m) unter Verwendung des empfangenen Gateway-Identifikators (SSID) umfasst.

10. Steuerverfahren nach Anspruch 7,
**dadurch gekennzeichnet, dass** dieses außerdem umfasst:
- einen Schritt des Empfangens (E14, E'14), auf dem Punkt-zu-Punkt-Kommunikationskanal (SP), eines Identifikators (DID) der Versatzvorrichtung (5);
- einen Schritt des Auswählens (E19) einer Versatzvorrichtung (5) unter mehreren als Funktion eines empfangenen Identifikators (DID).

11. Vorrichtung (5) zum Versetzen eines digitalen Inhalts, der auf einem Server (3) von Inhalten verfügbar ist, auf den über mindestens ein Service-Gateway (6, 6bis) zugegriffen werden kann und der durch mindestens zwei Vorrichtungen (4, 7) eines Benutzers verarbeitet werden kann, eine erste Vorrichtung, die als mobile Vorrichtung (4) bezeichnet wird, und mindestens eine zweite Vorrichtung, die als Abspielvorrichtung (7) bezeichnet wird, wobei die Abspielvorrichtung (7) mit einer Versatzvorrichtung (5) verbunden ist, wobei der Inhalt auf der mobilen Vorrichtung (4) ausgewählt wird und auf der Abspielvorrichtung (7) abgespielt wird, **dadurch gekennzeichnet ist, dass** die Vorrichtung umfasst:
- ein Modul zum Öffnen (DEP, COMD) eines Punkt-zu-Punkt-Kommunikationskanals (SP) zwischen der mobilen Vorrichtung (4) und der Versatzvorrichtung (5);
- ein Modul zum Empfangen (DEP, COMD), auf dem Kommunikationskanal (SP), eines Identifikators (SSID, WEP) irgendeines Service-Gateways;
- ein Modul zum Verbinden der Versatzvorrichtung (5) mit einem lokalen Netz (10, 10b, 10m) unter Verwendung des empfangenen Gateway(6, 6b)-Identifikators (SSID1, SSID2);
- ein Modul zum Empfangen (DEP, COMD) eines Identifikators eines Inhalts (CH1), der abzuspielen ist;
- ein Modul zum Zugreifen (HTTP, COMD, E50, E51) auf den identifizierten Inhalt auf dem Server (3) von Inhalten über das identifizierte Gateway (4, 6, 6bis).

12. Vorrichtung zum Steuern des Versetzens eines digitalen Inhalts, der auf einem Server (3) von Inhalten verfügbar ist, auf den über mindestens ein Service-Gateway (6, 6bis) zugegriffen werden kann und der durch mindestens zwei Vorrichtungen (4, 7) eines Benutzers verarbeitet werden kann, eine erste Vorrichtung, die als mobile Vorrichtung (4) bezeichnet wird, und mindestens eine zweite Vorrichtung, die als Abspielvorrichtung (7) bezeichnet wird, wobei die zweite Abspielvorrichtung (7) mit einer Versatzvorrichtung (5) verbunden ist, wobei der Inhalt auf der mobilen Vorrichtung (4) ausgewählt wird und auf der Abspielvorrichtung (7) abgespielt wird, **dadurch gekennzeichnet ist, dass** die Steuervorrichtung umfasst:
- ein Modul zum Öffnen (CDEP, COMM) eines Punkt-zu-Punkt-Kommunikationskanals (SP) zwischen der mobilen Vorrichtung (4) und der Versatzvorrichtung (5);
- ein Modul zum Senden (CDEP, COMM), auf dem Kommunikationskanal, eines Identifikators (SSID, WEP) irgendeines Service-Gateways;
- ein Modul zum Senden (CDEP, COMM) eines Identifikators eines Inhalts (CH1), der abzuspielen ist.

13. Terminal (4), umfassend eine Versatzsteuervorrichtung nach Anspruch 12.

14. Elektronischer Schlüssel (5), umfassend eine Versatzvorrichtung nach Anspruch 11.

15. Computerprogramm, umfassend Codeinstruktionen zur Durchführung des Verfahrens zum versetzten Abspielen eines Inhalts nach Anspruch 1, wenn diese von einem Prozessor ausgeführt werden, oder zur Durchführung des Verfahrens zum Steuern des versetzten Abspielens eines Inhalts nach Anspruch 7, wenn diese von einem Prozessor ausgeführt werden.

## Claims

1. Method for the offset rendering of a digital content, said content being available on a content server (3) accessible via at least one service gateway (4,6) and being able to be processed by at least two devices (4,7) of a user, a first device termed the mobile device (4) and at least one second device termed the rendering device (7), the rendering device (7) being connected to an offset device (5), said content being selected on the mobile device (4) and rendered on the rendering device (7), the method being **characterized in that** it comprises, at the level of the offset apparatus, the following steps:
- opening (E42, E'42) of a point-to-point communication channel (SP) between the mobile device (4) and the offset device (5);
- reception (E45, E'45) on the communication channel (SP) of an identifier (SSID, WEP) of an arbitrary service gateway (6, 6bis, 4);
- connection (E47, E'47) of the offset device (5) to a local network (10, 10b, 10m) by using the gateway identifier received;
- reception (E49, E'49) of an identifier of a digital content (CH1) to be rendered;
- access (E50, E51) to the content identified on the content server (3) via the identified gateway (4, 6, 6bis) .

2. Offset method according to Claim 1, **characterized in that** the phase of opening a communication channel between the mobile device and the offset device is followed by a step of sending (E43, E'43) on the communication channel of an identifier (DID) of the offset device (5).

3. Offset method according to Claim 1, **characterized in that** the communication channel (SP) between the mobile device (4) and the offset device (5) is established over a low-consumption link (LP, BT).

4. Offset method according to Claim 1, **characterized in that** it further includes a step of storage (E45, E'45) of the identifier of the local network (SSID, WEP) in a memory (M) of the offset device (5).

5. Offset method according to Claim 1, **characterized in that** the reception (E49) of an identifier of a content to be rendered (CH1) is effected on the point-to-point communication channel (SP) .

6. Offset method according to Claim 1, **characterized in that** the phase of opening a point-to-point communication channel (SP) between the mobile device (4) and the offset device (5) is followed by a sub-step of pairing (E48) in the course of which the user sets the offset device (5) into a pairing state (WPS-PBC) .

7. Method of control of the offset rendering of a digital content, said content being available on a content server (3) accessible via at least one service gateway (6, 6bis) and being able to be processed by at least two devices (4,7) of a user, a first device termed the mobile device (4) and at least one second device termed the rendering device (7), the rendering device (7) being connected (HDMI) to an offset device (5), said content being selected on the mobile device (4) and rendered on the rendering device (7), the method being **characterized in that** it comprises, at the level of the mobile apparatus, the steps of:
- opening (E13, E13) of a point-to-point communication channel (SP) between the mobile device (4) and the offset device (5);
- sending (E16, E16) on the point-to-point communication channel of an identifier (SSID1, SSID2, WEP) of an arbitrary service gateway;
- sending (E20, E'20) of an identifier of a content (CH1) to be rendered.

8. Method of control according to Claim 7, **characterized in that** the gateway identifier (SSID) sent is that of the mobile device (4).

9. Method of control according to Claim 7, **characterized in that** it comprises a step of connection (E18, E18) of the offset device (5) to a local network (10, 10b, 10m) by using the gateway identifier (SSID) received.

10. Method of control according to Claim 7, **characterized in that** it further includes:
- a step of reception (E14, E14) on the point-to-point communication channel (SP) of an identifier (DID) of the offset device (5);
- a step of choosing (E19) of an offset device (5) from among several, as a function of a received identifier (DID).

11. Offset device (5) for offset of a digital content available on a content server (3) accessible via at least one service gateway (6, 6bis) and being able to be processed by at least two devices (4,7) of a user, a first device termed the mobile device (4) and at least one second device termed the rendering device (7), the rendering device (7) being connected to an offset device (5), said content being selected on the mobile device (4) and rendered on the rendering device (7), **characterized in that** the device comprises:
- a module (DEP, COMD) for opening a point-to-point communication channel (SP) between the mobile device (4) and the offset device (5);
- a module (DEP, COMD) for receiving, on the communication channel (SP), an identifier of an arbitrary service gateway (SSID, WEP);
- a module for connecting the offset device (5) to a local network (10, 10b, 10m) by using the gateway (6, 6b) identifier (SSID1, SSID2) received;
- a module (DEP, COMD) for receiving an identifier of a content (CH1) to be rendered;
- a module for access (HTTP, COMD, E50, E51) to the content identified on the content server (3) via the identified gateway (4, 6, 6bis).

12. Control device for controlling the offset of a digital content available on a content server (3) accessible via at least one service gateway (6, 6bis) and being able to be processed by at least two devices (4,7) of the user, a first device termed the mobile device (4) and at least one second device termed the rendering device (7), the second rendering device (7) being connected to an offset device (5), said content being selected on the mobile device (4) and rendered on the rendering device (7), **characterized in that** the control device comprises:
- a module (CDEP, COMM) for opening a point-to-point communication channel (SP) between the mobile device (4) and the offset device (5);
- a module (CDEP, COMM) for sending on the communication channel an identifier of an arbitrary service gateway (SSID, WEP);
- a module (CDEP, COMM) for sending an identification of a content (CH1) to be rendered.

13. Terminal (4) including an offset control device according to Claim 12.

14. Electronic key (5) including an offset device according to Claim 11.

15. Computer program comprising code instructions for the implementation of the method for the offset rendering of a content in accordance with Claim 1, when they are executed by a processor, or for the implementation of the method of control of the offset rendering of a content in accordance with Claim 7, when they are executed by a processor.
